# EUROPÄISCHE PATENTSCHRIFT

(11) **EP 1 033 354 B1**
(45) Veröffentlichungstag und Bekanntmachung des Hinweises auf die Patenterteilung: **21.01.2004**
(21) Anmeldenummer: 00103969.2
(22) Anmeldetag: 25.02.2000
(51) Int. Cl.: C04B 28/26, C04B 38/00, B28B 1/50, B28B 11/24

(54) **Mineralischer schaumförmiger Bau- und Strukturwerkstoff sowie Verfahren zur dessen Herstellung und Vorrichtung zur Durchführung des Verfahrens**
Foamed mineral building- and structual element, method for its production and apparatus for carrying out said method
Element de construction structural en mousse minérale, procédé de son fabrication et dispositif pour la mise en oeuvre de ce procédé

(30) Priorität: 02.03.1999 DE 19909077
(43) Veröffentlichungstag der Anmeldung: 06.09.2000
(73) Patentinhaber: Niedner, Peter Dr., 83707 Bad Wiessee (DE)
(72) Erfinder: Franke, Matthias, Dipl.-Ing., 01468 Moritzburg (DE); Niedner, Peter, Dr. ing., 83707 Bad Wiessee (DE); Choyna, Kathrin, 09599 Freiberg (DE)
(74) Vertreter: Grünecker, Kinkeldey, Stockmair & Schwanhäusser Anwaltssozietät

(56) Entgegenhaltungen:
- DE-A- 2 055 283
- CHEMICAL ABSTRACTS, vol. 110, no. 16, 17. April 1989 (1989-04-17) Columbus, Ohio, US; abstract no. 140414c, T.SAKAI: "Manufacture of foamed inorganic articles for building materials" XP000058894 & JP 63 242977 A (OSAKA SODA CO.,LTD) 7. Oktober 1988 (1988-10-07)
- CHEMICAL ABSTRACTS, vol. 88, no. 2, 9. Januar 1978 (1978-01-09) Columbus, Ohio, US; abstract no. 11079a, E.SATO: "Thermally insulating material" XP000063197 & BR 7 508 401 A 19. Juli 1977 (1977-07-19)
- CHEMICAL ABSTRACTS, vol. 84, no. 12, 22. März 1976 (1976-03-22) Columbus, Ohio, US; abstract no. 78849n, Y.KATAYAMA: "Production of inorganic foams and its apparatus" XP000063235 & JP 50 044217 A (EIDAI CO., LTD.) 21. April 1975 (1975-04-21)
- DATABASE WPI Section Ch, Week 197534 Derwent Publications Ltd., London, GB; Class L02, AN 1975-56203W XP002139280 & JP 50 002396 A (SHIMIZU K), 11. Januar 1975 (1975-01-11)

## Beschreibung

Die Erfindung betrifft einen mineralischen, schaumförmigen Bau- und Strukturwerkstoff basierend auf einer im wesentlichen gleichmäßig aufgeschäumten Alkalisilikat- und/oder Ammoniumsilikatmatrix mit einer offenen Porenstruktur.

Aus der DE 2 055 283 A ist ein Verfahren zur Herstellung von Schaumstoffen mit feinporiger, geschlossener Struktur beschrieben, ausgehend von wasserfreien Alkalimetallsilikat, wobei das Silikat hydratisiert wird, und das Wassergehalt auf einen bestimmten Wert eingestellt wird und das resultierende Material nachfolgend durch Zufuhr von thermischer Energie verschäumt wird. Die erzielten Materialien sind u.a. für den Einsatz im Bausektor und als Werkstoff in der Industrie verwendbar. In den Beispielen werden verschiedene Zusammensetzungen aufgeschäumt und hierdurch einerseits geschlossenporiger Schaum sowie auch offenporiger Schaum erzielt Hinsichtlich des offenporigen Silikatschaumes ist ausgeführt, dass sich dieser bei einer Behandlung bei 49°C und 96%iger relativer Luftfeuchtigkeit rasch zersetzt und wasserlöslich ist.

Aus der Chemical Abstract, Volumen 110, Nr. 16, 17. April 1989 ist die Herstellung von verschäumten, organischen Erzeugnissen zum Einsatz als Baumaterial bekannt. Hierbei wird eine wässrige Lösung aus einem Alkalimetallsilikat mit Hartem, wie Oxiden, Chloriden, Sulfaten, Thiosulfaten, Sulfiten. Nitraten, Hydroxiden, Phosphaten und Polyphosphaten gemischt, auf einen H₂O-Gehalt von 5 bis 30 Gew.-% getrocknet und anschließend mit Mikrowellen aufgeschäumt.

Femer beschreibt Chemical Abstract Volume 88, Nr. 2,09. Januar 1998 das Aufschäumen von Wasserglas mittels Mikrowellen bei 500°C.

Die Database WPI Section Ch, Week 1975934 Derwent Publications Ltd., London offenbart alkalibeständige, nichtmetallische, anorganische Faserbögen, die in eine wässrige Nathumsilikatlösung. weiche eine geringe Menge an wasserbeständigen anorganischen Pulver enthält, eingetaucht und getrocknet werden, um den Wassergehalt auf 20 bis 40% einzustellen, durch Erwärmen aufgeschäumt und in Form gebracht und abgekühlt werden, um nicht brennbare Baumaterialien zu erhalten.

Darüberhinaus sind bereits verschiedene Mineralschäume bekannt. So ist ein Glasschaumgranulat bekannt, das aus Glasmehl unter Zusatz eines Blähmittels, welches bei hohen Temperaturen ein Treibgas abspaltet, hergestellt wird. Glasschaumgranulate werden vielfältig, z.B. als Leichtzuschlag bei Mörteln und Putzen eingesetzt Sie sind jedoch um ein Vielfaches schwerer als Kunststoffschäume und sind deshalb wegen der höheren Wärmeleitung für den Einsatz als Dämmstoff nur bedingt geeignet.

Femer wurde bereits vorgeschlagen, neben Glasmehl auch andere Stoffe, wie Gesteinsmehl, Schluff und Ton als Rohstoffe für Minerafschäume zu verwenden. Die so hergestellten Produkte sind bis 1000 °C formbeständig und druckfest. Sie können jedoch ebenfalls nicht als Dämmstoffe eingesetzt werden.

Wasserglas ist als Rohstoff im Bauwesen u.a. auch als Begleitrohstoff bei der Herstellung von mineralischen Schäumen bekannt. Bei den bekannten Mineralschäumen ist es üblich, z.B. zur Verbesserung des Rohstoffaufschlusses, Wasserglas zuzugeben. Wasserglas wird hierbei jedoch als Hilfsstoff zugegeben und eingesetzt, der wenig zur Eigenart und Qualität des Mineralschaums beiträgt. Wasserglas verliet bei den bisher erforderlichen hohen Blähtemperaturen von 700 °C -1200 °C seine Reaktivität.

Femer wird Wasserglas als Bindemittel verwendet. Jedoch wirkt Wasserglas hierbei nicht als Schaumbildner.

Es ist bereits bekannt, Wasserglas als Schaumbildner bei Brandschutz-Platten, - Spachtelmassen und -Anstrichen einzusetzen. Hier wird die Eigenschaft des Wasserglases, im Brandfall unter hoher Temperatureinwirkung spontan und unkontrolliert aufzuschäumen, für diese industriellen Brandschutzprodukte genutzt.

Der Wassergehalt liegt bei den bekannten Brandschutzprodukten zwischen 20 Gew. -% und 40 Gew. -%, bezogen auf die Gesamtrezeptur, inklusive Füllstoffe.

Der Einsatz von handelsüblichen Alkalisilikaten , die einen Wassergehalt von mehr als 40 Gew. -% haben, führt aufgrund des hohen Wassergehaltes bei der üblichen Energiezufuhr von außen zu einer explosionsartigen, unkontrollierten Schäumung. Es entstehen hierbei großporige und nichthomogene Produkte, bei weichen sich die kleineren Wasserdampfblasen zu größeren Blasen verbinden. Die im Brandfall durch die o.g. Brandschutzprodukte aus dem molekularen Wasser heraus gebildeten Schäume besitzen bekanntlich keine Druckfestigkeit und werden bereits durch geringste Außeneinwirkung zerstört. Sie sind nur für den kurzfristigen Brandschutz geeignet.

Obwohl Alkalisilikate, wie Natrium- Kalium- oder auch Ammoniumsilikate, vielfältige industrielle Anwendungen als Bindemittel, Kleber, Waschmittel u.a. haben, ist es bisher nicht gelungen, industrielle Schäume mit gleichbleibender, guter Qualität z.B. für die Wärmedämmung, den Leichtbau und andere Anwendungen aus Wasserglasrohstoff zu erzeugen.

Der Erfindung liegt die Aufgabe zu Grunde, einen verbesserten Bau- und Strukturwerkstoff industriell hochwertige Produkte zur Verfügung zu stellen.

Diese Aufgabe wird durch ein mineralischen, schaumförmigen Bau- und Strukturwerkstoff, basierend auf einer im wesentlichen gleichmäßig aufgeschäumten Alkalisilikatund/oder Ammoniumsilikatmatrix, mit einer offenen Porenstruktur, dadurch gelöst, dass die offenporige Matrix im wesentlichen wasserfrei oder formstabil ist und dass sie aus einer Vielzahl amorpher und/oder kristalliner unregelmäßiger Mikrohohlkugeln, Mikrohohtkugelschaten, Mikroplätten und/oder Mikrostäbchen besteht, welche die Matrix bilden, die im Bereich von 80% bis 97% vorzugsweise 90% bis 97% diffusionsoffen ist.

Der erfindungsgemäße Bau- und Strukturwerkstoff zeichnet sich eine geringe Wärmeleistungsfähigkeit und gute Druckfestigkeit auf, so dass dieser für den Einsatz in verschiedensten industriellen Gebieten geeignet ist. Darüber hinaus ist der erfindungsge-mäße Werkstoff bis zu Temperaturen von 900°C gebrauchstüchtig.

Bevorzugte Ausgestaltungen des erfindungsgemäßen Schaumes sind in den Unteransprüchen 2 bis 9 beschrieben.

Femer stellt die vorliegende Erfindung ein Verfahren zur Herstellung der erfindungsgemäß mineralischer schaumförmiger Bau- und Strukturwerkstoffe zur Verfügung umfassend folgende Schritte
- Einstellen des Wassergehaltes eines Alkalisilikat- und/oder Ammoniumsilikatausgangsmateriales auf einen bestimmten Wert
- Aufschäumen des vorbehandelten Alkalisilikat- und/oder Ammoniumsilikatmateriales.

Durch das erfindungsgemäße Verfahren ist es möglich, hochwertige und gleichmäßig feinporige Schäume mit einer Alkalisilikatmatrix herzustellen, welche eine sehr geringe Wärmeleitfähigkeit und gute Druckfestigkeit aufweisen. Hierbei ermöglicht es die Erfindung insbesondere kommerziell erhältliche Rohstoffe, z.B. Wasserglas, einzusetzen, d.h., Materialien, die bisher nicht als Ausgangsmaterialien für mineralische Bau- und Strukturwerkstoffe eingesetzt werden konnten. Da kommerziell erhältliche Produkte als Rohstoffe eingesetzt werden können, ist das erfindungsgemäße Verfahren auch im Hinblick auf die Kosten vorteilhaft.

Vorzugsweise wird das erfindungsgemäße Einstellen des Wassergehaltes durch Trocknen des Alkalisilikat- und/oder Ammoniumsilikatmatrixmaterials erzielt. Hierbei hat sich ein Wassergehalt des Alkalisilikat- und/oder Ammoniumsilikatmatrixmaterials nach der durchgeführten Trocknung von weniger als 20 Gew. -% jedoch mehr als 5 Gew.-%, bezogen auf das Alkalisilikat- und/oder Ammoniumsitikatmatrixmaterial als besonders geeignet erwiesen. Besonders gute Ergebnisse werden mit 15 Gew. -% bis 10 Gew. -% Restwassergehalt erzielt.

Die Trocknung kann erfindungsgemäß auf zwei Wegen erfolgen. Der eine Weg ist die Trocknung und Schäumung in einem Prozeß in zwei Temperaturstufen, wobei die Hauptrohstoffkomponente eine wenig oder nicht vorentwässerte Alkalisilikat- und/oder Ammoniumsilikatmatrix ist und wobei in der ersten Stufe des Prozesses der Wasserentzug durch Energiezufuhr bei Temperaturen bis zu 110 °C, vorzugsweise aber bei Temperaturen zwischen 80 °C und 90 °C erfolgt. Hierbei ist die wenig oder nicht vorentwässerte Alkalisilikat- und/oder Ammoniumsilikatmatrix vor der Trocknung eine hochviskose, wässrige Lösung, die in ihrer Konsistenz zwischen noch fließfähig bis schon erstarrt sein kann und die auch als Hüllmaterial für das gelöste Wasser und gegebenenfalls für Zuschlagstoffe dienen kann.

Der andere Weg ist die Herstellung durch Temperatur- und Druckeinwirkung auf eine Alkalisilikat- und/oder Ammoniumsilikatmatrix-Schüttung, die als Rohstoff als getrocknetes oder als kalziniertes Pulver oder granulatförmiges Material eingesetzt wird. Gegebenenfalls kann hierbei eine Zugabe von Wasser und/oder wässriger Lösung und/oder wässriger Suspension und/oder Alkalisilikat- und/oder Ammoniumsilikatflüssigkeit zweckmäßig sein, um eine Matrix mit exakt der gewünschten Konsistens herstellen zu können. Das auf beiden Wegen hergestellte Halbzeug ist eine hochviskose, pastöse bis erstarrte, kompakte Lösung, mit dem gewünschten Wassergehalt im Bereich zwischen 20 Gew.-% und 5 Gew.-%.

Femer hat sich herausgestellt, daß die Trocknung vorteilhaft unter Verwendung von Mikrowellen bei Temperaturen bis zu 110 °C, durchgeführt werden kann, vorzugsweise bei Temperaturen zwischen 80 °C und 90 °C.

Der Einsatz von Mikrowellenerwärmung ermöglicht hierbei die Intensität und Dauer der Energiezufuhr auf sehr einfache Art zu dosieren und gleichzeitig eine schonende Behandlung des Ausgangsmateriales zu gewährleisten.

Erfindungsgemäß kann die Mikrowellenerwärmung anschließend auch zum Aufschäumen des vorbehandelten Ausgangsmateriales eingesetzt werden.

Aus dem Alkalisilikat- und/oder Ammoniumsilikatmatrixausgangsmaterial kann erfindungsgemäß ein mineralischer Schaum erzeugt werden, der je nach Anforderung das 10- bis 30-fache des Ausgangsvolumens aufweist. Durch intensiverer Energiezufuhr entsteht ein Produkt das weitgehend offenporig und hochdispers ist.

Der erfindungsgemäß hergestellte offenporige Schaum ist bis zu 97 % offenporig und besteht aus einer Vielzahl von amorphen und kristallinen, unregelmäßig geordneten Mikrohohlkugeln, Mikrohohlkugelschalen, Mikroplatten und Mikrostäben. Dadurch besteht eine hohe Diffusionsdurchlässigkeit für Luft, die sowohl bei Dämmstoffen als bebesonders auch bei Schallabsorbtionsstoffen von Interesse ist.

Bevorzugte weitere Ausführungsformen des Verfahrens sind in den Unteransprüchen 15 bis 40 beansprucht.

Gemäß eines weiteren Aspektes stellt die Erfindung eine Vorrichtung zur Durchführung des erfindungsgemäßen Verfahrens zur Verfügung umfassend: eine Konditioniereinrichtung zum Einstellen des Wassergehaltes des Alkalisilikat- und/oder Ammoniumsilikatausgangsmateriales und eine Heizeinrichtung zum Aufschäumen.

Bevorzugte Ausgestaltungen der erfindungsgemäßen Vorrichtungen sind in den Ansprüchen 43 bis 52 ausgeführt.

Der erfindungsgemäß hergestellte Schaum ist einerseits Werkstoff für Bau- und Strukturanwendungen, bei denen eine äußerst lange Lebensdauer gewünscht bzw. notwendig ist. Er ist andererseits auch wie Kunststoffschäume ein Verpackungsmaterial, bei dem eine kurze Lebensdauer genügt und bei dem eine dauerhafte chemische Beständigkeit unvorteilhaft und sogar ökologisch bedenklich wäre.

Erfindungsgemäß werden die beiden unterschiedlichen Anforderungen an den Werkstoff wie folgt gelöst

Bei Produkten mit einer hohen Anforderung an die Lebensdauer versagt nicht stabilisiertes Wasserglas. Infolge der hygroskopischen Eigenschaften von Alkalisilikatund/oder Ammoniumsilikatmatrixmaterial wäre der so hergestellte Schaum gegenüber Luftfeuchtigkeit ohne eine zusätzliche Ausrüstung auf Dauer nicht beständig. Deshalb wird bei gewünschter langer Lebensdauer nach einem weiteren Merkmal der Erfindung durch eine Zugabe von bis zu 20 Gew.-% an Calcium- oder Zink- oder Magnesium- oder Ammonium- oder Aluminiumhydroxid- oder -oxid- oder -salzverbindungen oder Kieseloder Tonerdegele bzw. -sole der Schaum dauerhaft stabilisiert.

Der so stabilisierte Schaum - ist ein idealer dauerhafter Dämmstoff, denn er kombiniert herausragende Eigenschaften. Er kombiniert jeweils die guten Eigenschaften von den bekannten Kunststoffschäumen (Wärmedämmung, Rohdichte) mit den guten Eigenschaften von Glas- und Keramikschäumen (Unbrennbarkeit, Offenporigkeit, Ökologie) ohne deren jeweiligen Nachteile aufzuweisen.

Der so erhaltene Mineralschaum hat u.a. folgende Eigenschaften:

| | |
|---|---|
| Rohdichte | 0,04 - 0,10 g/cm3 |
| Druckfestigkeit | 0,01 - 0,50 MPa |
| Wärmeleitfähigkeit | 0,03 - 0,10 W/(mK) |

Bei Produkten mit gewünschter niedrigerer Lebensdauer, insbesondere bei Verpackungen werden erfindungsgemäß die hygroskopischen Eigenschaften von Alkalisilikatund/oder Ammoniumsilikatmatrixmaterial zum ökologischen Recycling genutzt. Gebrauchte Verpackungen werden erfindungsgemäß, gegebenenfalls nach einer Vorzerkleinerung, in heißem Wasser oder mit Dampf aufgelöst und in eine Alkalisilikat-und/oder Ammoniumsilikatmatrix- lösung überführt. Dadurch wird das vormalige Verpackungsmaterial erfindungsgemäß auf einen kleinen Teil seines Schaumvolumens reduziert und kann in sinnvoller Weise dem Hersteller des Verpackungsmaterials als Rohstoff zur Verfügung gestellt werden. Da weder bei der Herstellung der Verpackung noch beim Wiederauflösen die Alkalisilikat- und/oder Ammoniumsilikatmatrix zerstört werden kann, kann dieser Recyclingprozeß beliebig oft wiederholt werden.

Soll das erfindungsgemäße Material als Verpackungswerkstoff eingesetzt werden hat es sich eine Verhältniszahl der Alkalisilikat- und/oder Ammoniumsilikatmatrix von SiO₂ zu Alkali- bzw. Ammoniumanteil von unter 2,5 als besonders bevorzugt herausgestellt.

Zur Herstellung von hochstabilisierten Werkstoffen hat es sich eine Verhältniszahl der Alkalisilikat- und/oder Ammoniumsilikatmatrix von SiO₂ zu Alkali- bzw. Ammoniumanteil von über 2 als besonders bevorzugt herausgestellt.

Die Eigenschaften der erfindungsgemäß hergestellten mineralischen Bau- und Strukturwerkstoffe können durch Zugabe von Zuschlagstoffen, insbesondere von Verstärkungsfasem, variiert bzw. verbessert werden. So kann z.B. die Druckfestigkeit durch Zugabe von 5 Gew.-% Glas- oder SiO₂-Fasern auf das bis zu 10-fache gesteigert werden.

Die Gründe für die in der Summe den Fachmann überraschenden guten Eigenschaften des erfindungsgemäßen mineralischen schaumförmigen Bau- und Strukturwerkstoffes können wie folgt erklärt werden:

Für die Wärmedämmung und für die Festigkeit sind geringe Rohdichte bei sehr gleichmäßig verteilten Mikrokavemen bzw. Mikroporen das Optimum. Solche Mineralschäume können mit den bisherigen Technologien nicht hergestellt werden, denn üblicherweise werden als Blähmittel beim Schäumen von Mineralschäumen Feststoffe, z.B. Oxyde, Carbonate, Kohlenstoff, SiC, etc. eingesetzt. Die Blähmittel haben eine Komgröße im Bereich von 5-63 Mikrometer und geben bei den Blähtemperaturen, die je nach Stoffgemisch zwischen 600 °C und 1200 °C liegen, größere Mengen heißes Treibgas jeweils an einer einzigen Stelle ab. Sie produzieren lokal entsprechend große Poren. Große Poren sind jedoch für gute Dämmeigenschaften unerwünscht.

Die bisher unerreichte Wunschvorstellung der Mineralschaumtechnologie beinhaltet, daß bereits im Ausgangsmaterial sowohl die Strukturmatrix als auch das Schäummittel so fein wie möglich verteilt sind. Erfindungsgemäß wird das durch eine molekulare Verteilung, also durch eine Lösung aller relevanten Reaktionsteilnehmer erreicht. Femer wird das durch eine Steuerung des Schäumprozesses erreicht, die so eingestellt wird, daß die molekulare Verteilung der sich bildenden Treibgasbläschen so lange wie möglich erhalten bleibt und sich im Produkt als Feinporigkeit wiederfindet. Ein gleichwertiges Produkt kann aus Feststoffgemischen nicht hergestellt werden.

Bei der vorliegenden Erfindung konnte erstmals dieses Optimum im Bereich der Mineralschaumtechnologie realisiert werden. Das wird dadurch belegt, daß erstmals in der Technologie der Schäumung, hier mit Wasserdampf als Treibmittel ein feinstporiger Schaum mit äußerst geringer Rohdichte gebildet werden konnte.

Bei den bekannten Verfahren zur Herstellung von Mineralschäumen erfolgt die Energiezufuhr von außen. Es entstehen je nach Korngröße und Kornverteilung des Blähmittels im Rohstoff kleine bis mittelgroße Treibgasblasen, die durch die kontinierliche Matrix bestehend aus der Mineralschmelze, die eine honigartige Konsistenz aufweist, in ihrer Position gehalten werden. Erfolgt jedoch eine lokale Überhitzung der Schmelze, dann hat das gleichzeitig und am gleichen Ort eine Erhöhung des partiellen Gasdrucks und eine Erniedrigung der Viskosität der Schmelze zur Folge. Das Ergebnis ist, daß Gasbläschen mobilisiert werden und daß eine Vereinigung von kleinen Blasen zu großen Blasen und eine Verschlechterung der Qualität. des Produktes erfolgt.

Bei den bekannten Verfahren ist eine lokale Überhitzung der Schmelze unvermeidlich, denn die Wärme wirkt von außen auf die Schmelze ein, die ihrerseits durch Schaumbildung am gleichen Ort bereits als Dämmstoff wirkt, der die Wärme schlecht nach innen weiterleitet. Das Ergebnis ist bei dieser Technologie die unvermeidliche Bildung großer Poren durch das sogenannte "Aufkochen" der Schmelze. Große Poren sind jedoch unerwünscht.

Erfindungsgemäß erfolgt die Energiezufuhr in die Alkalisilikatmatrix durch Anwendung der Mikrowellentechnik, mit der die oben beschriebenen Nachteile der bisherigen Technologie vollkommen beseitigt wurden.

Durch Anwendung dieses Teils der Erfindung kann erstmals bei der Herstellung von Mineralschaum jedem einzelnen Wassermolekül der Matrix gleichzeitig und wohldosiert Energie zugeführt werden.

Da der erfindungsgemäßen Alkalisilikat- und/oder Ammoniumsilikatmatrix ein Teil des Lösungswassers erfindungsgemäß bereits vor Beginn des Blähprozesses entzogen wurde, entwickelt sich durch die gut regelbare Energiezufuhr durch die Mikrowelle nur soviel Wasserdampf innerhalb der Schmelze, wie für die Schäumung angestrebt wird, bzw. wie für die jeweilige Produktqualität gewünscht wird. Eine unerwünschte Vereinigung von Wasserdampf-Bläschen unterbleibt.

Auch hat das erfindungsgemäße Verfahren den Vorteil, daß erstmals in der Technik der Mineralschaumherstellung der Energietransport vom Blähmittel zum Feststoff - erfolgt und nicht entsprechend dem Stand der Technik in umgekehrter Richtung. Das hat zur Folge, daß erfindungsgemäß das Blähmittel die Feststoffmatrix verflüssigt und nicht die Feststoffmatrix durch Energietransfer das Blähmittel zur Reaktion bringen muß. Auch sind die Energietransportwege bei Anwendung der Erfindung um Größenordnungen kürzer als bei der Anwendung des Standes der Technik. Während bei der Anwendung der Erfindung zur vollständigen Erwärmung der Matrix nur Entfernungen im Bereich des halben Abstandes der Wasser-Moleküle überwunden werden müssen, betragen die Energietransportwege z. B. bei der konventionellen Herstellung von Schaumglasblöcken bis zu 20 cm. Das erfindungsgemäße Verfahren zeichnet sich jedoch nicht nur deshalb durch sehr kurze Prozeßzeiten aus, sondern auch durch folgenden physikalischen Zusammenhang:
Lösungswasser, Mikrowellenerhitzung, gefangener Wasserdampf und Matrix wirken zusammmen als ein leistungsfähiges thermodynamisches System nach dem Prinzip des Wärmerohrs, das sich durch sehr hohe Wärmetransport und -übertragungswerte auszeichnet. Erfindungsgemäß werden sowohl Energietransportweg als auch Wärmetransfers so gestaltet, daß die physikalisch optimale Energieübertragung verwirklicht wird. Diese ermöglicht, daß das Temperaturgefälle im Mikrosystem gegen Null tendiert und dadurch eine optimale Reaktionszeit und Schaumqualität erreicht wird.

Während sich bei dem Aufschäumen von Wasserglas, wie bereits beschrieben, im Brandfall aus dem molekular verteiltem Wasser heraus gebildete Schäume, nur vorübergehend existieren und schließlich in sich zusammenfallen, geht der erfindungsgemäße Gedanke davon aus, daß zur Überwindung dieser physikalisch/chemischen Hürde, der Wasseranteil der Wasserglaslösung so eingestellt werden muß, daß beim Schäumen die Konzentration der Wasserdampf-Bläschen einerseits und die Konzentration der Alkalisilikat- und/oder Ammoniumsilikatmatrix andererseits innerhalb der erfindungsgemäßen Bereiche sein muß, damit die Bildung eines feinporigen tragfähigen stabilen Schaumes gewährleistet ist. Das ist bei den handelsüblichen Rohstoffen nicht der Fall, denn einerseits ist Alkalisilikatglas (Stückenglas) wasserfrei und deshalb nicht reaktiv und andererseits enthält handelsübliche Alkalisilikatlösung (Wasserglas) für den erfindungsgemäßen Schaumbildungsprozeß zuviel Wasser.

Die Erfindung zeigt auf, wie man aus handelsüblichen Rohstoffen durch Mischung und durch Teilentwässerung ein Alkalisilikat- und/oder Ammoniumsilikatmatrix erzeugen kann, das erstmals die Voraussetzungen zur Herstellung des erfindungsgemäßen Schaums mitbringt.

Hierbei hat sich ferner herausgestellt, daß der Wassergehalt der Alkalisilikatund/oder Ammoniumsilikatmatrix nicht nur innerhalb von bestimmten Grenzen einzustellen ist, sondern daß die Temperaturzufuhr sehr schonend erfolgen muß, damit nicht lokal eine verstärkte Bildung und/oder Überhitzung von Wasserdampfblasen erfolgt, die zu einer Schädigung der im Hinblick auf die Viskosität der Matrix temperatursensiblen Schaumstruktur führen würde.

Erfindungsgemäß kann.eine Schaumbildung sogar in bestimmten Fällen bei konventioneller Wärmezufuhr durch Strahlungs-, Konvektions- oder Kontaktwärmeübertragung erfolgen, wenn die Wärmezufuhr so gesteuert wird, daß im Schaum bestimmte Temperaturen nicht überschritten werden können. Das ist besonders bei Produkten mit geringer Masse und/oder geringer Wandstärke, insbesondere bei feinkömigen Granulaten, erreichbar.

Ein wesentlicher weiterführender erfindungsgemäßer Gedanke ist, wie bereits dargestellt, die Verwendung von Mikrowellen als Energieträger. Durch konventionelle Erwärmung können größere Schaumkörper niemals optimal erwärmt werden, weil infolge der Schaumbildung, die an der Produktoberfläche beginnt, der Wärmefluß ins Innere des Produktes so stark eingeschränkt wird, daß eine lokale Erhitzung bzw. zeitliche Überexposition der oberflächennahen Schichten unvermeidlich ist.

Die Schäumung wird daher vorzugsweise durch Mikrowelleneinwirkung auf den vorhandenen Lösungswasseranteil in der Alkalisilikat- und/oder Ammoniumsilikatmatrix bewirkt. Es hat sich gezeigt, daß diese bereitwilliger und früher ankoppelt als andere wasserhaltige Begleitkomponenten der Rezeptur, wie z.B. Gips und andere kristallwasserhaltigen Zuschläge. Die Alkalisilikat- und/oder Ammoniumsilikatmatrix kann also geschäumt werden, ohne daß wasserhaltige Begleitkomponenten gleichzeitig entwässert bzw. zersetzt werden. Durch Anwendung von Mikrowellenerwärmung beginnt überraschenderweise die treibende Wirkung zuerst im Zentrum der Alkalisilikat- und/oder Ammoniumsilikatmatrix. Dies hat den großen Vorteil; daß die in situ gebildeten Wasserdampfblasen durch die sie umgebende Matrix gefangen bleiben und keine Chance zur Vereinigung oder zum Entweichen haben.

Durch geeignete Einstellung des Wassergehaltes und genaue Dosierung des Energieeintrages in die Alkalisilikat- und/oder Ammoniumsilikatmatrix mit Mikrowellen ist es sogar möglich, die Oberflächentemperaturen des Schaumes so niedrig zu halten, daß selbst ein Erweichen der Oberfläche unterbleibt. Das erlaubt z.B. sowohl die verklumpungsfreie und die verklebungsfreie Herstellung sowohl von Schüttgütern (Granulaten) im Haufwerk als auch von Formteilen in Formen. In beiden beispielhaften Fällen kann auf die sonst üblichen Trennmittel völlig verzichtet werden. Das ist eine weitere wesentliche Verbesserung im Vergleich zu den bekannten Verfahren.

Die zuvor beschriebene erfindungsgemäße Schäumung erfolgt so schonend, daß selbst organische Fasern, die als Verstärkungsmaterial in die Matrix eingearbeitet oder auf der Oberfläche aufgetragen wurden, thermisch nicht oder nur geringfügig geschädigt werden. Selbst die Herstellung von Sandwich-Produkten unter Verwendung von temperaturempfindlichen Komponenten, wie Papier, Kunststoffen, Textilien etc. ist durch das erfindungsgemäße Verfahren möglich, weil es niedrige Schäumtemperaturen mit kurzer Expositionszeit erlaubt. Das ist ein den Fachmann überraschendes Ergebnis und eröffnet ihm Möglichkeiten bei der Produktgestaltung, die es bisher nur durch Anwendung der Kunststofftechnologie oder der Verklebetechnik in einem zweiten Arbeitsgang gab.

Soweit bei der Herstellung von Schaum-Produkten höhere Oberflächentemperaturen erwünscht sind, kann auch eine kombinierte Anwendung von Mikrowellenerwärmung und externer Wärmezufuhr erfolgen. Durch gezielte Kombination der Energieflüsse kann jedes gewünschte Temperaturprofil über den Verlauf des Querschnitts des Schaumkörpers beim Schaumprozeß hergestellt werden. Auch kann durch Kühlung der Oberflächen bzw. der Formen ein Integralschaum mit größerer Dichte/Festigkeit an der Oberfläche und geringerer Dichte/Festigkeit im Inneren erzielt werden. Diese interessanten Produkte waren bisher nur durch Kunststoffschäume realisierbar.

Durch Auswahl der Temperaturführung, insbesondere durch Steuerung der Energiezufuhr, besonders in kontinuierlichen Produktionsanlagen für Granulate bzw. für strangförmiges Material kann auch die zeitliche Temperaturentwicklung im Produkt beeinflußt werden. Bei Anwendung von Mikrowelle wurde festgestellt, daß der Schäumprozeß sehr gut gesteuert werden kann. Auch kann so eine optimale Verbindung zwischen Füllstoff (z.B. Fasem), Feststoffen (wie Sandwich-Paneelen) etc. und der Schaummatrix hergestellt werden. Die festgestellte Erhöhung der Druckfestigkeit und anderer mechanischer Eigenschaften bei faserverstärkten Schäumen beweisen diese Wirkung.

Die erfindungsgemäßen Schäumtemperaturen liegen ferner im Bereich der Polymerisationstemperaturen von Duroplasten und Elastomeren. Es ist ein weiteres Merkmal der Erfindung, daß Duroplaste und Polymere, z.B. in Form von harzgetränkten Gewebe-Halbfabrikaten oder in Form von harzgetränktem Papier unpolymerisiert eingelegt werden und in situ eingeschäumt und gehärtet bzw. polymerisiert werden.

Die vorliegende Erfindung wird im folgenden anhand der Zeichnung näher erläutert. Es zeigt
- Fig. 1: ein Verfahren zur kontinuierlichen Herstellung des erfindungsgemäßen Mineralschaumes;
- Fig. 2: Details des in Figur 1 dargestellten Verfahrens;
- Fig. 3: ein gemäß des erfindungsgemäßen Verfahrens hergestelltes Sandwichprodukt, vor und nach dem Aufschäumungsschritt;
- Fig. 4: ein anderes gemäß des erfindungsgemäßen Verfahrens hergestelltes Sandwichprodukt;
- Fig. 5: ein weiteres gemäß des erfindungsgemäßen Verfahrens hergestelltes Sandwichprodukt;
- Fig. 6: noch ein weiteres gemäß des erfindungsgemäßen Verfahrens hergestelltes Sandwichprodukt;
- Fig. 7: einen Mauerstein mit eingeführtem erfindungsgemäßen Mineralschaum;
- Fig. 8: eine erfindungsgemäße Vorrichtung zur Erzeugung eines Granulates aus Alkalisilikat- und/oder Ammoniumsilikatmatrix und
- Fig. 9: eine andere erfindungsgemäße Vorrichtung zur Erzeugung eines Granulates aus Alkalisilikat- und/oder Ammoniumsilikatmatrix.

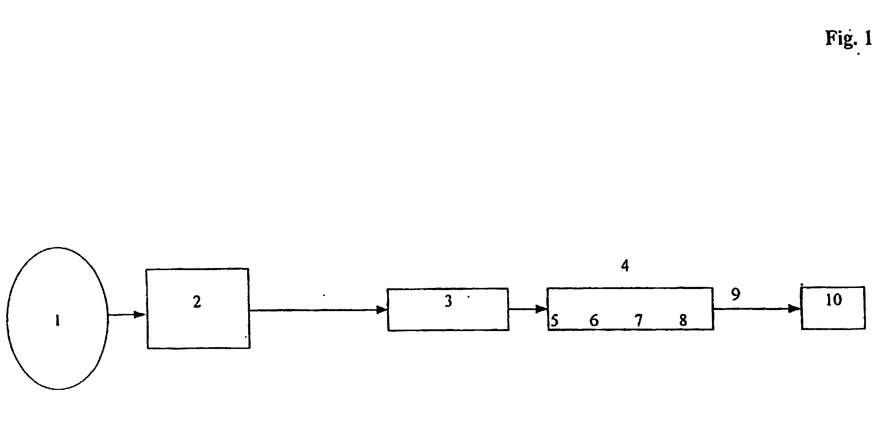

Wie in Figur 1 dargestellt, werden die verschiedenen Rohstoffe zur Durchführung des erfindungsgemäßen Verfahrens in Silos und Tanks, z.T. auch in Gebinden in der Rohstoffbevorratung 1 gelagert und der Gemengeanlage 2 zudosiert. Hierbei werden die Rohstoffe abgewogen und miteinander vermischt. Anschließend wird der Wassergehalt der Rohstoffe durch Trocknung oder durch Mischung eingestellt und der erhaltene Ausgangsstoff wird je nach vorgegebenem Versatz gekühlt oder beheizt, bis die Zusammensetzung, der Wassergehalt, die Temperatur, die Viskosität und andere Parameter dem gewünschten Versatz und der gewünschten Viskosität der vorgesehenen Alkalisilikat- und/oder Ammoniumsilikatmatrix, z.b. einer Natriumalkalisilikatmatrix, entsprechen.

Aus der Gemengeanlage 2 wird das erhaltene Alkalisilikatausgangsmaterial über eine Aufgabevorrichtung dem Trockner 3 zugeführt. In der Aufgabevorrichtung wird aus dem Alkalisilikat- und/oder Ammoniumsilikatmatrixausgangsmaterial ein strangförmiges Rohprodukt geformt. Falls die Trocknung durch Mikrowellenerwärmung erfolgt, wird vorzugsweise das aus dem Alkalisilikat- und/oder Ammoniumsilikatmatrix- ausgangsmaterial geformte Rohprodukt einseitig oder beidseitig, vorzugsweise jedoch beidseitig mit einem saugfähigen Material versehen. Als saugfähiges Material eignen sich Textilgewebe, Papierbahnen, Fließe, Filze, Bahnen aus Holzspänen, Zellulose oder andere Biofasem, Platten aus Gips oder Porenbeton, unglasierte Fein- oder Grobkeramik oder jedes andere saugfähige Material.

Anschließend wird das erhaltene, mit einem saugfähigen Material beschichtete Rohprodukt einer Trocknung unterworfen, durch welche der Wassergehalt auf einen bestimmten vorgegebenen Wert nachgeregelt wird. Während des Trocknungsschrittes wird das aus dem Rohprodukt austretende Wasser über die saugfähige Schicht in die Umgebung abgegeben.

Erfindungsgemäß wird bei mineralischen Bau- und Strukturwerkstoffen, die keine Verbindung mit einem saugfähigen Material besitzen, der Wassergehalt der Alkalisilikat- und/oder Ammoniumsilikatmatrix niedrig eingestellt. In diesem Fall kann eine Verklebung mit der Form und/oder der Granulate untereinander vollständig vermieden werden. Erfindungsgemäß werden hierzu Wassergehalte unter 15 Gew.-%, vorzugsweise zwischen 13 Gew.-% bis 10 Gew.-% verwendet.

Wird hingegen eine Verklebung im Sinne einer Sandwichbindung gewünscht, werden Wassergehalte über 15 Gew.-% eingestellt. In diesem Fall kann eine sehr gute Bindung zwischen den verschiedenen Produktschichten erreicht werden.
Nach der Einstellung des erforderlichen Wassergehaltes wird das Halbzeug dem Schäumofen 4 zugeführt. In diesem Ofen wird das Halbzeug zu dem erfindungsgemäßen Schaum aufgeschäumt. Der Schäumofen 4 wird vorzugsweise mit Mikrowellen beheizt, wobei vorzugsweise mehrere Heizzonen, z.B. vier Heizzonen 5,6,7,8 angeordnet sind, in denen die Energie kontrolliert zugeführt wird.

Die geschäumte Alkalisilikatmatrix verläßt den Schäumofen 4 und wird durch die Schere 9 auf das gewünschte Format geschnitten, um das fertiggestellte Produkt 10 zu erhalten.

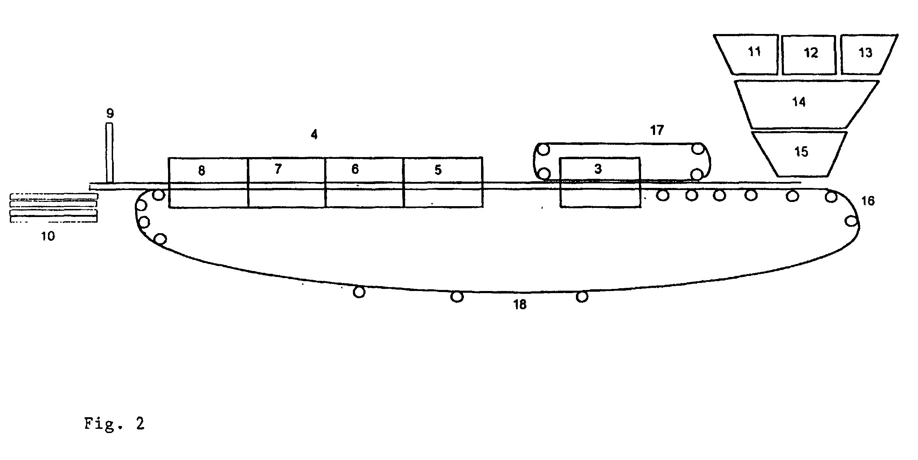

In Figur 2 ist eine andere Ausführungform des erfindungsgemäßen Verfahrens sowie der erfindungsgemäßen Vorrichtung dargestellt.

Die verschiedenen Versatzkomponenten werden über Trichter 11, 12, 13 der Mischund Homogenisiereinrichtung 14 und anschließend der Dosiereinrichtung 15 zugeführt. Die Dosiereinrichtung 15 ist hierbei ein Mundstück mit einem Rakel oder mit einer anderen Formungseinrichtung zur Bildung eines strangförmigen Gutes, z.B. einem Walzwerk ausgebildet. Das geformte Gut wird aus der Dosiereinrichtung 15 auf ein Band 16 gelegt, das den Transport des geformten Alkalisilikat- und/oder Ammoniumsilikatmatrixausgangsmateriales durch die weiteren Verfahrensschritte übemimmt. Der Trockner 3 ist im vorliegenden Fall mit einem umlaufenden Band 17 aus Filz oder aus einem anderen saugfähigen Material ausgerüstet, das die Trocknung unterstützt. Hierbei befindet sich das saugfähige Material des Bandes 17 in ummittelbaren Kontakt mit dem geformten Gut. Falls zur Durchführung des erfindungsgemäßen Verfahrens im Einzelfall ein beidseitig umlaufendes Band erforderlich ist, kann das Transportband 16 unterteilt werden, damit auch die Anordnung eines unteren Bandes mit Bandrückführung, ähnlich dem Band 17 ermöglicht wird.

Nach dem Trocknen wird das geformte Gut, wie bereits in Bezug auf Figur 1 beschrieben, anschließend dem Schäumofen 4, mit unterschiedlichen Heizzonen 5, 6, 7 und 8, zugeführt. Das aufgeschäumte fertige Produkt wird mit einer Schere oder Säge oder einem anderen Schneidwerkzeug 9 zugeschnitten und mit einer Stapelvorrichtung 10 konfektioniert.

Vorzugsweise ist das Transportband als umlaufendes Band mit Bandrückführung 18 ausgebildet, wobei der Bandrückführbereich auch zur Reinigung des Bandes dient.

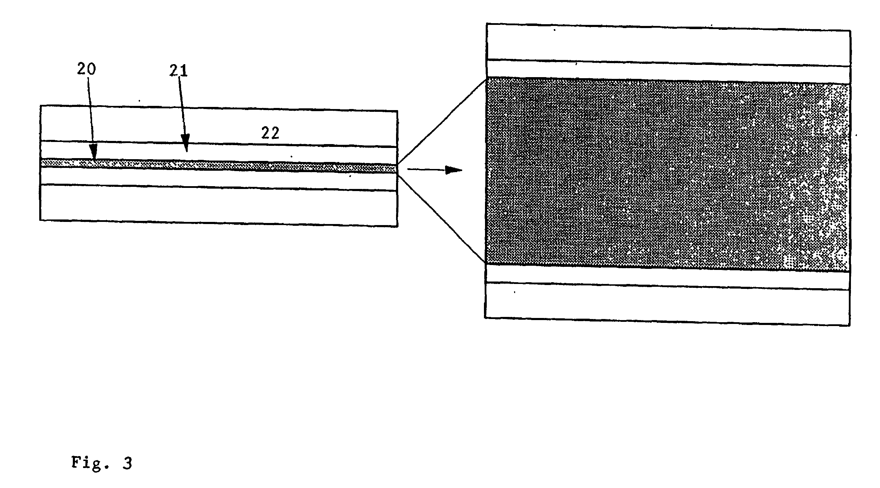

In Figur 3 ist ein erfindungsgemäß hergestelltes Sandwichprodukt vor und nach der Schäumung dargestellt. Hierbei wird das Alkalisilikat- und/oder Ammoniumsilikatmatrixausgangsmaterial zu einem plattenförmigen Vorprodukt 20 geformt und anschließend beidseitig mit Platten 21 aus saugfähigem Material versehen, die nach dem Aufschäumungsschritt die Sandwichoberfläche bilden. Solche Platten 21 können aus Gipskarton, Porenbeton, unglasierter Fein- und Grobkeramik, Glasschaum, Textilfasem, Mineralfasern, gebundenen Holzfaser und anderem Material bestehen. Während des Aufschäumungsschrittes können die Sandwich-Komponenten durch zusätzliche Stützplatten 22 gehalten werden, welche den Schäumdruck aufnehmen. Das Alkalisilikatmatrixmaterial erfährt während des Aufschäumens eine 10- bis 30-fache Volumenvergrößerung.

Gleichzeitig wird während des Herstellungsverfahrens bereits eine so gute Verbindung zwischen den einzelnen Sandwichschichten erzielt, daß die bisher üblichen Verfahrensschritte des Verklebens der Schichten entfallen.

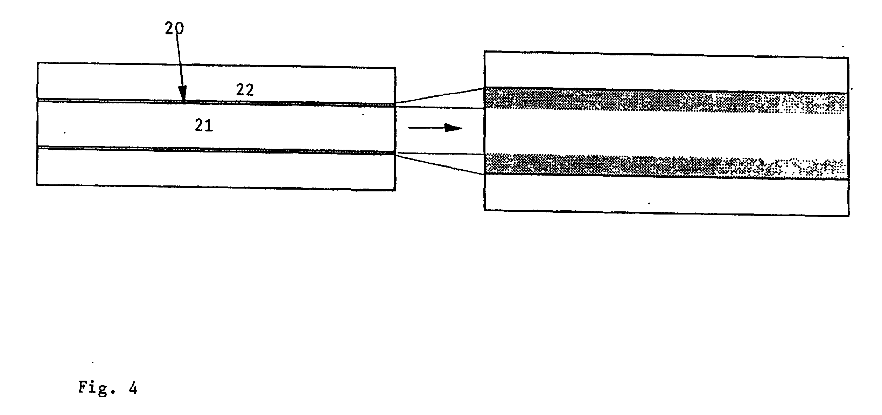

In Figur 4 wird ein weiteres erfindungsgemäß hergestelltes Sandwichprodukt dargestellt, bei welchem das saugfähige Material 21 nicht als Außenschicht sondern als Kern im Inneren eines Sandwich eingebaut wird und auf beiden Außenseiten mit einem plattenförmigen Alkalisilikat- und/oder Ammoniumsilikatmatrixausgangsmaterial versehen ist. Hierfür sind insbesondere Platten aus Mineratfasem geeignet. Es können jedoch auch die in bezug auf Beispiel 3 genannten Materialien eingesetzt werden.

Auch kann das saugfähige, den Kern bildende Material von vier bzw. von allen sechs Seiten mit dem Alkalisilikat- und/oder Ammoniumsilikatmatrixausgangsmaterial umgeben werden.

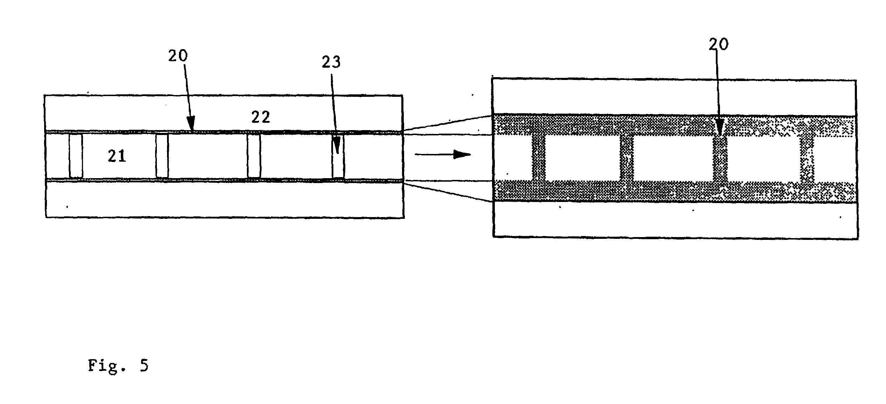

In Fig. 5 ist ein erfindungsgemäß hergestelltes Sandwich produkt dargestellt, das durch einen unterbrochenen Kern 21, z.B. eine Lochplatte, aus saugfähigem Material gekennzeichnet ist und im übrigen dem Sandwichprodukt gemäß Fig. 4 entspricht. Hierbei wird das den unterbrochenen Kern bildende Material 21 nur im Bereich seiner Außenseiten von dem Alkalisilikat- und/oder Ammoniumsilikatmatrixausgangsmaterial 20 umgeben. Während des Aufschäumungsschrittes dehnt es auch in die Ausnehmungen 23 innerhalb des saugfähigen Materials 21 aus und umgibt schließlich dieses Material vollständig.

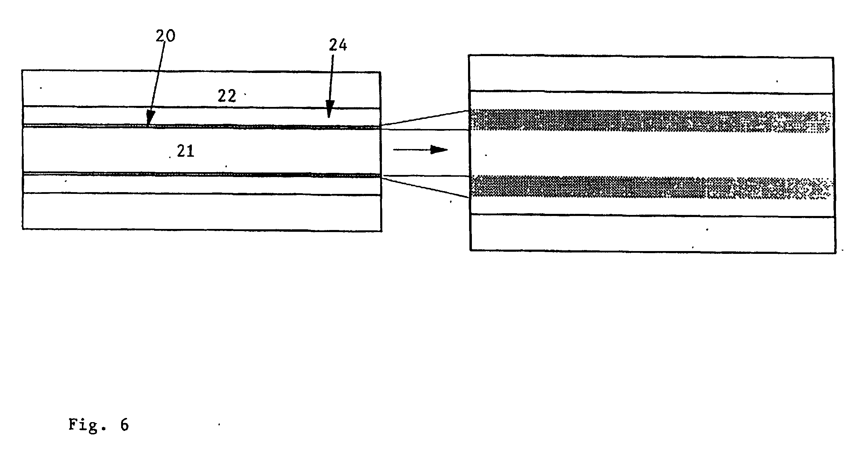

Das ist Fig. 6 dargestellte Sandwich produkt ist mit Oberflächenplatten 24 versehen, die nicht wasserdurchlässig sind, wie z.B. Glasscheiben, Hartfaserplatten, Faserzementplatten, Metallplatten. Dieses Sandwichprodukt wird erfindungsgemäß unter Verwendung eines saugfähigen Kerns, wie in bezug auf Figur 4 und 5 beschrieben, durch Hinzufügung der Oberflächenplatten 24 hergestellt.

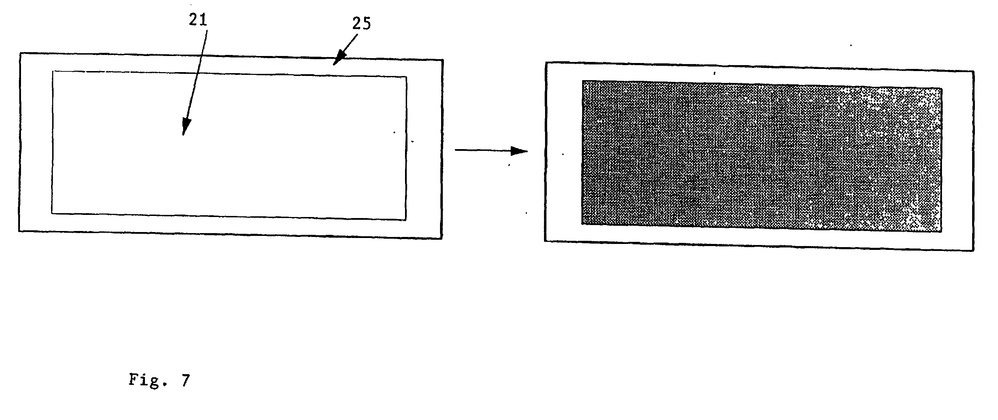

Ferner ist in Fig. 7 ein herkömmlicher Mauerbaustein, z. B. ein Ziegel, ein zementgebundener Stein, etc. dargestellt, der mit dem erfindungsgemäßen Mineralschaum ausgeschäumt worden ist. Solche Mauerbausteine weisen in der Praxis aus statischen Gründen Stege auf, die mit der Umfassung 25 ein Lochbild formen.

Gemäß des erfindungsgemäßen Verfahrens wird durch eine Dosiervorrichtung jedem einzelnen Loch des Mauerbausteins exakt die Menge an Grannulat aus Alkalisilikat- und/oder Ammoniumsilikatmatrixausgangsmaterial zudosiert, die für die volumengenaue Ausschäumung erforderlich ist. Anschließend wird in einem Mikrowellen-Ofen die Ausschäumung durchgeführt.

Mauerbausteine bzw. Plattenbauelemente können erfindungsgemäß aus mehreren haufwerksporigen oder gefügedichten Betonplatten bestehen, zwischen denen entsprechend viele Schaumschichten aus Alkalisilikat- und/oder Ammoniumsilikatmatrix angeordnet sind. Der Kraftschluß zwischen den Betonplatten wird erfindungsgemäß mit Ankern hergestellt.

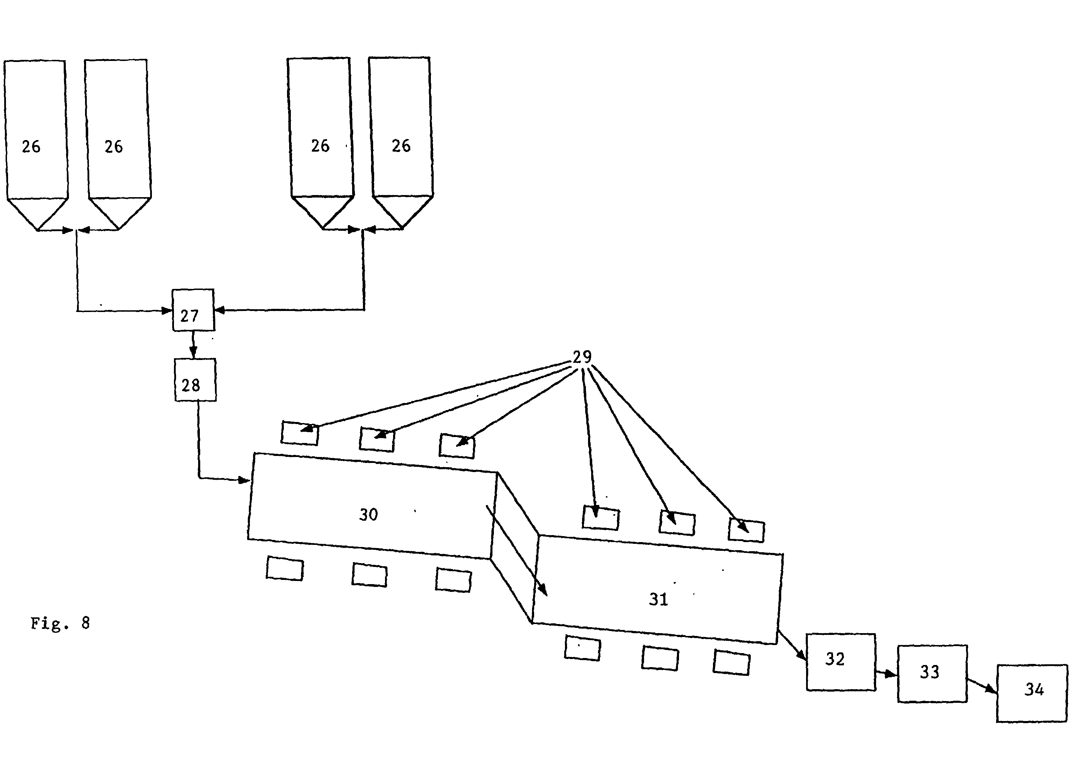

In Figur 8 ist ferner eine Anlage zur Erzeugung von erfindungsgemäßen mineralischen Bau- und Strukturwerkstoff in Granulatform im Detail dargestellt.

Aus Silos 26 werden die Rohstoffkomponenten der Mischeinrichtung 27 zugeführt und zu dem Alkalisilikat- und/oder Ammoniumsilikatmatrixausgangsmaterial zusammengestellt. Über eine Dosiervorrichtung 28 wird das Rohgranulat dem Ofen zugeführt.
Das dargestellte Verfahren ist erfindungsgemäß in eine Trocknungszone 30 und in eine Aufschäumzone 31 unterteilt. Es ist jedoch gleichermaßen möglich, beide Verfahrensschritte innerhalb einer einzigen Zone durchzuführen, welche dann in einen Trocknungsabschnitt und einen Aufschäumabschnitt unterteilt ist.

Der Aufschäumzone 31 können eine Kühlzone 32, eine Siebung 33 und eine Konfektionierung 34 folgen. Die Öfen in der Trocknungs- und Aufschäumzone sind vorzugsweise als Drehrohre oder Pendelwannen ausgebildet. Die Mikowellenerzeuger 29 befinden sich hierbei vorzugsweise außerhalb des Produktraumes des Trockners 30 bzw. des Ofens 31, und sind entweder stationär oder sich mitbewegend angeordnet. Das Konstruktionsmaterial des Trockners 30 und des Ofens 31 besteht bei Energiezufuhr durch außerhalb des Produktraumes angeordnete Mikrowellensender, vorzugsweise aus nichtmetallischen Werkstoffen.

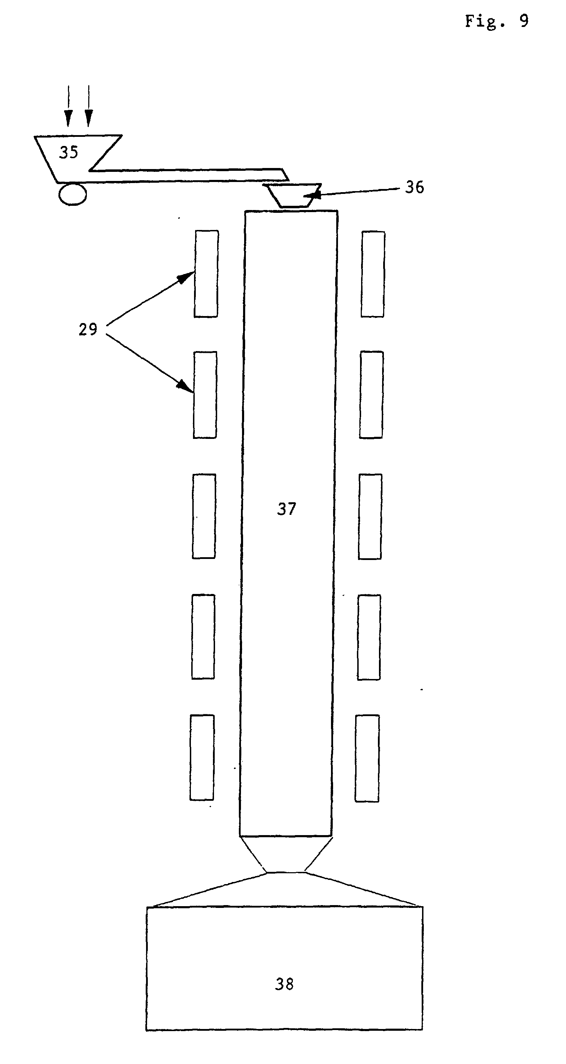

Ein weitere Ausführungsform einer Anlage zur Erzeugung von Granulat aus Alkalisilikat- und/oder Ammoniumsilikatmatrixausgangsmaterial ist in Fig. 9 dargestellt.

Durch eine Aufgabevorrichtung 35 wird das Alkalisilkatmatrixausgangsmaterial der Aufgabevorrichtung 36 zugeführt. Das Produkt fällt im freien Fall durch die Aufschäumvorrichtung 37 und wird während des Falls durch Energiezufuhr durch Mikrowelle aus den Generatoren 29 erwärmt, getrocknet und aufgeschäumt. Das fertige Produkt fällt in den Bunker 38 und wird von dort aus zur Kühlung, Siebung und Konfektionierung weitergefördert.

Die Erfindung wird im folgenden anhand von bevorzugten Beispielen näher beschrieben ohne den Umfang der Erfindung zu beschränken.

### Beispiel 1

Alkalisikatmatrix:
- Natriumsilikat (VZ 2,5), Wassergehalt: 55,5 Gew.-%, Rezepturan- teil 90 Gew.-%,
- Zugabe von 10 Gew.-% Zinkoxid-Pulver und Homogenisieren durch Rühren,
- Eindampfen auf < 35 Gew.-% Restwassergehalt,
- Auswalzen zu Platten von ca. 1 - 2 mm Stärke und Eindampfen auf < 15 Gew.-% Wassergehalt,
- Brechen der Platten auf Körnung 0,5 - 5 mm,
- Eintragen Körnung ca. 5 mm Schütthöhe in Formen mit Abdeckplatte,
- Schäumen im Mikrowellenofen (Laborofen, 4 KW, 250° C / 60 sec.)
   Aufschäumen auf ca. 30 mm

Produkt: Schaum zwischen Abdeckplatten
Eigenschaften:

| | |
|---|---|
| Rohdichte | 0,07 g/cm3 |
| Porengröße | 5 - 500 Mikrometer |
| Porosität offen | 94 %, |
| Wärmeleitfähigkeit | 0,05 W/(mK) |
| Druckfestigkeit | 0,10 MPa |

### Beispiel 2

Alkalisikatmatrix:
- Natriumsilikat Silkalon D (VZ 2,0) sprühgetrocknet, Rezepturanteil 60 Gew.-%
   Wasserzuteilung 30 Gew.-% (kochend),
- Zugabe von 10 Gew.-% Zinkoxid-Pulver,
- Rühren der Masse zu einem homogenisierten, steifen Brei bei Temperaturen zwischen 50°C - 80 °C,
- Auswalzen der Masse auf Platten von 1 - 2 mm Stärke und Eindampfen auf < 15 Gew.-% Restwassergehatt,
- weiter wie bei 1.

Produkt: Schaum zwischen Abdeckplatten
Eigenschaften:

| | |
|---|---|
| Rohdichte | 0,07 g/cm3 |
| Porengröße | 5 - 500 Mikrometer |
| Porosität offen | 93 % |
| Wärmeleitfähigkeit | 0,06 W/(mK) |
| Druckfestigkeit | 0,12 Mpa |
| Feuchtebeständigkeit : | 0,3 Gew.-% Verlust bei 15 Tagen Wasserlagerung |

### Beispiel 3

Alkalisilikatmatrix:
- Natriumnsilikat 58/60 DS (VZ 2,0) 46Gew.-% Wassergehalt, Anteil 50 Gew.-%,
   Erhitzen auf 50 - 80°C,
- Zugabe Silkalon (VZ 2,0), Rezepturanteil 40 Gew.-%,
- Zugabe von 10 Gew.-% Tonerdehydrat,
- Homogenisieren und Auswalzen der steifen Masse,
- weiter wie bei Beispiel 1

Produkt: Schaum zwischen Abdeckplatten
Eigenschaften:

| | |
|---|---|
| Schaumrohdichte | 0,065 g/cm3 |
| Porengröße | 5 - 300 Mikrometer |
| Porosität offen | 95 % |
| Wärmeleitfähigkeit | 0,05 W/(mK) |
| Druckfestigkeit | 0,14 MPa |
| Feuchtebeständigkeit | 0,5 Gew.-% Verlust bei 15 Tagen Wasserlagerung |

### Beispiel 4

Beispiel 4 entspricht beispiel 3 mit der Ausnahme, daß 5 Gew.-% SiO₂-Fasern zugegeben wurden.
Produkt: Schaum zwischen Abdeckplatten
Eigenschaften:

| | |
|---|---|
| Schaumrohdichte | 0,065 g/cm3 |
| Porengröße | 5-300 Mikrometer |
| Porosität offen | 95 % |
| Wärmeleitfähigkeit | 0,05 W/(mK) |
| Druckfestigkeit | 0,14 MPa |
| Feuchtebeständigkeit: | 0,5 Gew.-% Verlust bei 15 Tagen Wasserlagerung |

### Beispiel 5

Alkalisilikatmatrix:
- Natriumsilikat 58/60 (VZ 2,0), Rezepturanteil 60 Gew.-%,
- Kiesel-Sol (Lithosol 1530, SiO2-Gehalt 30%), Rezepturanteil 20 Gew.-%,
- Erhitzen auf 50 - 80°C,
- Zugabe von Silkalon D (VZ 2,0), Rezepturanteil 20 Gew.-%,
- Auswalzen und Nachtrocknen auf 15 Gew.-% Restwassergehalt,
- weiter wie bei 1.

Produkt: Schaum zwischen Abdeckplatten
Eigenschaften:

| | |
|---|---|
| Schaumrohdichte | 0,07 g/cm3 |
| Porengröße | 5 - 400 Mikrometer |
| Porosität offen | 94 % |
| Wärmeleitfähigkeit | 0,05 W/(mK) |
| Druckfestigkeit | 0,14 MPa |
| Feuchtebeständigkeit | 0,4 Gew.-% Verlust bei 15 Tagen Wasserlagerung |

### Beispiel 6

Alkalisilikatmatrix:
- Natriumsilikat 58/60 DS (VZ 2,0) Rezepturanteil 80 Gew.-%,
- Erhitzen auf 50 - 80° C,
- Zugabe von Silkalon D (VZ 2,0), Rezepturanteil 20 Gew.-%,
- Zugabe von Zinkoxid-Pulver, Rezepturanteil 20 Gew.-%,
- Homogenisieren und Eindampfen auf Restwassergehalt 13 Gew.- %,
   Abkühlen auf 20°C,
- Brechen der festen, spröden Masse auf eine Körnung 0,2 - 3 mm,
- Eintragen der Komschüttung ohne Trennmittel auf ein Durchlauf band (Glasfasergewebe o.ä.),
- Erhitzen im Mikrowellen-Kanal auf 200°C in 60 Sekunden,
- Austrag des Schaumgranulates durch Absaugung und Sieben nach Komgruppen

Produkt: Schaumgranulat
Eigenschaften:

| | |
|---|---|
| Körnung | 20-30 mm |
| Schüttdichte | 0,05 kg/l |
| Komdruckfestigkeit : | 0,015 MPa |
| Feuchtebeständigkeit : | 0,45 Gew.-% Verlust bei 15 Tagen Wasserlagerung |

## Patentansprüche

1. Mineralischer schaumförmiger Bau- und Strukturwerkstoff basierend auf einer im wesentlichen gleichmäßig aufgeschäumten Alkalisilikat- und/oder Ammoniumsilikatmatrix, die eine offene Porenstruktur umgibt,
**dadurch gekennzeichnet, dass**
die offenporige Matrix im wesentlichen wasserfrei und formstabil ist, und dass sie aus einer Vielzahl amorpher und/oder kristalliner unregelmäßiger Mikrohohlkugeln, Mikrohohlkugelschalen, Mikroplättchen und/oder Mikrostäbchen besteht, weiche eine Matrix bilden, die im Bereich von 80 % bis 97 %, vorzugsweise 90 % bis 95 % diffusionsoffen ist.

2. Mineralischer schaumförmiger Bau- und Strukturwerkstoff nach Anspruch 1, wobei das Alkalisilikat- und/oder Ammoniumsilikatausgangsmaterial bei Temperaturen von 100 °C bis 700 °C, vorzugsweise bei 150 °C bis 250 °C aufgeschäumt ist.

3. Mineralischer schaumförmiger Bau- und Strukturwerkstoff nach wenigstens einem der Ansprüchen 1 oder 2, zusätzlich enthaltend Stabilisierungskomponenten, vorzugsweise bis zu 20 Gew. -% Calcium- oder Zink- oder Magnesium- oder Ammonium - oder Aluminiumhydroxid- oder -oxid- oder -salzverbindungen oder Kiesel- oder Tonerdegele- oder -sole oder Mischungen dieser Stoffe.

4. Mineralischer schaumförmiger Bau- und Strukturwerkstoff nach wenigstens einem der Ansprüche 1 bis 3, wobei das Verhältnis der Alkalisilikat- und/oder Ammoniumsilikatmatrix von SiO₂ zu Alkali- bzw. Ammoniumanteil über 2 beträgt.

5. Mineralischer schaumförmiger Bau- und Strukturwerkstoff nach wenigstens einem der Ansprüche 1 bis 3, wobei das Verhältnis der Alkalisilikat- und/oder Ammoniumsilikatmatrix von SiO₂ zu Alkali- bzw. Ammoniumanteil unter 2,5 beträgt.

6. Mineralischer schaumförmiger Bau- und Strukturwerkstoff nach wenigstens einem der Anspruches bis 5, **gekennzeichnet durch** die folgenden Eigenschaften: Rohdichte 0,04 -0,10 g/cm³, Druckfestigkeit 0,010 -0,50 MPa, Wärmeleitfähigkeit 0,03-0,10 W/mK).

7. Mineralischer schaumförmiger Bau- und Strukturwerkstoff nach wenigstens einem der Ansprüche 1 bis 6, des weiteren enthaltend anorganische und/oder -organische feinkörnige Füllstoffe wie Bentonit, Gips, Kreide, Kalk, Gesteinsmehl, Glasmehl, Zement, Tonerde, Graphit und dergleichen oder organische Mehle wie Holzmehl, und anders Biomaterial oder Kunststoff- oder Gummimehle, zur Erhöhung der Festigkeit und der chemischen Beständigkeit.

8. Mineralischer schaumförmiger Bau- und Strukturwerkstoff nach wenigstens einem der Ansprüche 1 bis 7, des weiteren enthaltend Verstärkungsfasem wie Glas-, Keramik-, Skobalith-, Mineral-, Garbon-, Biofasem, synthetische Fasern und anderen Fasern, wobei die Fasern eine Länge unter 10 mm, vorzugsweise unter 3 mm haben.

9. Mineralischer schaumförmiger Bau- und Strukturwerkstoff nach wenigstens einem der Ansprüche 1 bis 7, des weiteren enthaltend Verstärkungsfasem, wie Restfasem der industrie. insbesondere Scher Reste aus der Herstellung von Textilien, Teppichen, Glasfaserprodukten, Carbonprodukten und Biofaserreste aus der Verarbeitung von Holz, Zellulose oder anderen Naturfasern.

10. Verfahren zur Herstellung eines mineralischen schaumförmigen Bau- und Strukturwerkstoffes gemäß wenigstens einem der Ansprüche 1 bis 9, umfassend die folgenden Schritte:
- Einstellen des Wassergehaltes des Alkalisilikat- und/oder Ammoniumsilikatausgangsmaterials auf einen bestimmten Wert,
- Aufschäumen des vorbehandelten Alkalisilikat- und/oder Ammoniumsilikatmaterials.

11. Verfahren zur Herstellung eines mineralischen schaumförmigen Bau- und Strukturwerkstoffes nach Anspruch 10, **dadurch gekennzeichnet, daß** die Einstellung des Wassergehaltes des Alkalisilikat- und/oder Ammoniumsilikatausgangsmaterials durch Trocknen durchgeführt wird.

12. Verfahren zur Herstellung eines mineralischen schaumförmigen Bau- und Strukturwerkstoffes nach wenigstens einem der Ansprüche 10 oder 11, **dadurch gekennzeichnet, daß** der Wassergehalt des Alkalisilikat- und/oder Ammoniumsilikatausgangsmaterials auf einen Anteil von weniger als 20 Gew.-%, vorzugsweise auf 10 bis 15 Gew.-%, jedoch nicht weniger als 5 Gew-% bezogen auf das Alkalisilikatund/oder Ammoniumsilikatausgangsmaterials eingestellt wird.

13. Verfahren zur Herstellung eines mineralischen schaumförmigen Bau- und Strukturwerkstoffes nach wenigstens einem der Ansprüchen 11 oder 12, **dadurch gekennzeichnet, daß** die Trocknung des Alkalisilikat- und/oder Ammoniumsilikatausgangsmaterials unter Einsatz von Mikrowellen bei Temperaturen bis zu 110 °C vorzugsweise bei Temperaturen zwischen 80°C bis 90 °C durchgeführt wird.

14. Verfahren zur Herstellung eines mineralischen schaumförmigen Bau- und Strukturwerkstoffes nach wenigstens einem der Ansprüche 10 bis 13, **dadurch gekennzeichnet, daß** die Trocknung des Alkalisilikat- und/oder Ammoniumsilikatausgangsmaterials in einem beheizten Kneter, Extruder, Kalander oder in einem Band-, Walzen-, Tellertrockner oder in anderem Trocknergerät durchgeführt wird.

15. Verfahren zur Herstellung eines mineralischen schaumförmigen Bau- und Strukturwerkstoffes nach wenigstens einem der Ansprüche 10 bis 14, **dadurch gekennzeichnet, daß** das Alkalisilikat- und/oder Ammoniumsilikatausgangsmaterial mit eingestelltem Wassergehalt in dem Aufschäumungsschritt auf das 5 - 30-fache, vorzugsweise auf das 10 - 20-fache expandiert wird.

16. Verfahren zur Herstellung eines mineralischen schaumförmigen Bau- und Strukturwerkstoffes nach wenigstens einem der Ansprüche 10 bis 15, **dadurch gekennzeichnet, daß** das Aufschäumen bei Temperaturen zwischen 100 °C und 700 °C, vorzugsweise bei Anwendung einer Mikrowellenerwärmung zwischen 150 °C und 250 °C erfolgt.

17. Verfahren zur Herstellung eines mineralischen schaumförmigen Bau- und Strukturstoffes nach wenigstens einem der Ansprüche 10 bis 16, **dadurch gekennzeichnet, daß** das Aufschäumen unter Anwendung von Mikrowellen durchgeführt wird, wobei die Expositionszeit im Temperaturbereich ab 100 °C bis zum Abschluß der Volumenvergrößerung weniger als 600 Sekunden, vorzugsweise weniger als 120 Sekunden beträgt.

18. Verfahren zur Herstellung eines mineralischen schaumförmigen Bau- und Strukturwerkstoffes nach wenigstens einem der Ansprüche 10 bis 16, **dadurch gekennzeichnet, daß** das Aufschäumen durch Wärmeeinwirkung von außen, vorzugsweise durch Strahlungs-, Konvektions- und/oder Kontaktbeheizung durchgeführt wird.

19. Verfahren zur Herstellung eines mineralischen schaumförmigen Bau- und Strukturwerkstoffes nach wenigstens einem der Ansprüche 10 bis 18, **gekennzeichnet durch** den zusätzlichen Schritt des Verfestigens des expandierten Alkalisilikatund/oder Ammoniumsilikatausgangsmaterials **durch** einfrierende Kristallisation und/oder einfrierende Verglasung bei Temperaturen im Bereich von 20 °C bis 100 °C.

20. Verfahren zur Herstellung eines mineralischen schaumförmigen Bau- und Strukturwerkstoffes nach wenigstens einem der Ansprüche 10 bis 19, **gekennzeichnet durch** den zusätzlichen Schritt des Einbringens des Alkalisilikat- und/oder Ammoni umsilikatausgangsmaterials mit eingestelltem Wassergehalt in eine gekühlte Form oder eine gekühlte Zone der Form, wodurch eine oberflächennahe Verfestigung des Bau- und Strukturwerkstoffes bewirkt wird.

21. Verfahren zur Herstellung eines mineralischen schaumförmigen Bau- und Strukturwerkstoffes nach wenigstens einem der Ansprüche 10 bis 19, **gekennzeichnet durch** den zusätzlichen Schritt des Einbringens des Alkalisilikat- und/oder Ammoniumsilikatausgangsmaterials mit eingestelltem Wassergehalt in eine zusätzlich beheizte oder vorgeheizte Form oder eine beheizte Zone der Form, wodurch eine offenporige Oberfläche des Bau- und Strukturwerkstoffes, vorzugsweise für Anwendungen der Schallabsorption oder als Filtermaterial, bewirkt wird.

22. Verfahren zur Herstellung eines mineralischen schaumförmigen Bau- und Strukturwerkstoffes nach wenigstens einem der Ansprüche 10 bis 21, **dadurch gekennzeichnet, daß** das Alkalisilikat- und/oder Ammoniumsilikatausgangsmaterial vor dem Schritt des Einstellens des Wassergehaltes mit Zuschlagstoffen zur Stabilisierung, Verstärkung und/oder Färbung vermischt wird.

23. Verfahren zur Herstellung eines mineralischen schaumförmigen Bau- und Strukturwerkstoffes nach wenigstens einem der Ansprüche 10 bis 22, **dadurch gekennzeichnet, daß** das Alkalisilikat- und/oder Ammoniumsilikatausgangsmaterial nach dem Schritt des Einstellens des Wassergehaltes mit oberflächenverstärkenden Material beschichtet wird.

24. Verfahren zur Herstellung eines mineralischen schaumförmigen Bau- und Strukturwerkstoffes nach Anspruch 23, **dadurch gekennzeichnet, daß** das oberflächenverstärkenden Material aus Geweben, Folien, Spänen, Fasern und/oder Mehlen besteht.

25. Verfahren zur Herstellung eines mineralischen schaumförmigen Bau- und Strukturwerkstoffes nach wenigstens einem der Ansprüche 10 bis 24, **gekennzeichnet durch** den zusätzlichen Schritt des Vermischens des Alkalisilikat- und/oder Ammoniumsilikatausgangsmaterials mit Zuschlagstoffen in Form von Calcium- oder Zinkoder Magnesium- oder Ammonium - oder Aluminium-Hydroxid- oder -oxid- oder-salzverbindungen oder Kiesel- oder Tonerdegele/sole oder Mischungen dieser Stoffe, wobei der Anteil dieser Zuschlagstoffe weniger als 20 Gew.-% beträgt.

26. Verfahren zur Herstellung eines mineralischen schaumförmigen Bau- und Strukturwerkstoffes nach wenigstens einem der Ansprüche 10 bis 25, **dadurch gekennzeichnet, daß** zu dem Alkalisilikat- und/oder Ammoniumsilikatausgangsmaterial vor dem Einstellen des Wassergehaltes Verstärkungsfasem zugegeben werden.

27. Verfahren zur Herstellung eines mineralischen schaumförmigen Bau- und Strukturwerkstoffes nach Anspruch 26, **dadurch gekennzeichnet, daß** als Verstärkungsfasem Glasfasern, Skobalitfasem, Synthesefasem, Garbonfasem, Keramikfasem und/oder Biofasem zugegeben werden.

28. Verfahren zur Herstellung eines mineralischen schaumförmigen Bau- und Strukturwerkstoffes nach Anspruch 26 oder 27, **dadurch gekennzeichnet, daß** die Verstärkungsfasem eine Faserlänger von weniger als 10 mm, vorzugsweise unter 3 mm aufweisen.

29. Verfahren zur Herstellung eines mineralischen schaumförmigen Bau- und Strukturwerkstoffes nach wenigstens einem der Ansprüche 10 bis 28, **dadurch gekennzeichnet, daß** zu dem Alkalisilikat- und/oder Ammoniumsilikatausgangsmaterial vor dem Einstellen des Wassergehaltes Restfasem aus der Industrie, insbesondere Scher-Reste aus der Herstellung von Textilien, Teppichen, Glasfasern, Carbonprodukten und ähnlichen Fasern und/oder Sägespäne und andere Biofasem zugegeben werden.

30. Verfahren zur Herstellung eines mineralischen schaumförmigen Bau- und Strukturwerkstoffes nach wenigstens einem der Ansprüche 10 bis 29, **dadurch gekennzeichnet, daß** das Alkalisilikat- und/oder Ammoniumsilikatausgangsmaterial vor oder nach dem Einstellen des Wassergehaltes mit einem saugfähigen Material vollständig oder teilweise ummantelt wird.

31. Verfahren zur Herstellung eines mineralischen schaumförmigen Bau- und Strukturwerkstoffes nach Anspruch 30, **dadurch gekennzeichnet, daß** als Ummantelung ein saugfähiges Material verwendet wird, wie Filze, Vliese, Mineralfasem, saugfähige organische Stoffe, Fritten oder unglasierte Grob- oder Feinkeramik.

32. Verfahren zur Herstellung eines mineralischen schaumförmigen Bau- und Strukturwerkstoffes nach Anspruch 30 oder 31, **dadurch gekennzeichnet, daß** sich das saugfähige Material während der Verfahrensschritte mit der Alkalisilikat- und/oder Ammoniumsilikatmatrix verbindet und eine Deckschicht des fertigen Produktes bildet.

33. Verfahren zur Herstellung eines mineralischen schaumförmigen Bau- und Strukturwerkstoffes nach wenigstens einem der Ansprüche 10 bis 32, **dadurch gekennzeichnet, daß** das Alkalisilikat- und/oder Ammoniumsilikatmatrixmaterial vor dem Einstellen des Wassergehaltes in eine gewünschte Form geformt wird.

34. Verfahren zur Herstellung eines mineralischen schaumförmigen Bau- und Strukturwerkstoffes nach wenigstens einem der Ansprüche 10 bis 32, **dadurch gekennzeichnet, daß** das geformte Alkalisilikat- und/oder Ammoniumsilikatmatrixmaterial vor oder nach dem Einstellen des Wassergehaltes in Schäumformen aus Kunststoff, Keramik oder anderen mineralischen Werkstoffen eingelegt wird.

35. Verfahren zur Herstellung eines mineralischen schaumförmigen Bau- und Strukturwerkstoffes nach wenigstens einem der Ansprüche 10 bis 32, **dadurch gekennzeichnet, daß** das Alkalisilikat- und/oder Ammoniumsilikatausgangsmateriat vor dem Einstellen des Wassergehaltes zu einem Granulat geformt wird.

36. Verfahren zur Herstellung eines mineralischen schaumförmigen Bau- und Strukturwerkstoffes nach wenigstens einem der Ansprüche 10 bis 35, **dadurch gekennzeichnet, daß** die Schritte des Einstellens des Wassergehaltes und des Aufschäumens zeitlich und/oder räumlich voneinander getrennt durchgeführt werden.

37. Vorgetrocknetes Halbzeug zur Herstellung eines mineralischen schaumförmigen Bau- und Strukturwerkstoffes gemäß des Verfahrens nach wenigstens einem der Ansprüche 10 bis 36, erhalten nach dem Schritt des Einstellens des Wassergehaltes.

38. Vorrichtung zur Durchführung des Verfahren gemäß der Ansprüche 10 bis 36, **gekennzeichnet durch**
- eine Konditioniereinrichtung zum Einstellen des Wassergehaltes des Alkalisilikatund/oder Ammoniumsilikatmatrixausgangsmaterials und **durch**
- eine Heizeinrichtung zum Aufschäumen.

39. Vorrichtung nach Anspruch 38, **dadurch gekennzeichnet, daß** die Konditioniereinrichtung als Trockeneinrichtung ausgebildet ist.

40. Vorrichtung nach Anspruch 39 oder 40, **dadurch gekennzeichnet, daß** eine Beförderungsvorrichtung vorgesehen ist, um das Alkalisilikat- und/oder Ammoniumsilikatmatrix zu, zwischen und in den einzelnen Einrichtungen zu befördern.

41. Vorrichtung nach wenigstens einem der Ansprüche 38 bis 40, **dadurch gekennzeichnet, daß** vor der Konditioniereinrichtung eine Mischeinrichtung vorgesehen ist, um das Alkalisilikat- und/oder Ammoniumsilikatausgangsmaterial und gegebenenfalls Zuschlagstoffe zu vermischen.

42. Vorrichtung nach wenigstens einem der Ansprüche 38 bis 41, **dadurch gekennzeichnet, daß** vor der Konditioniereinrichtung eine Homogenisiereinrichtung und/oder Dosiereinrichtung und/oder eine Formgebungseinrichtung vorgesehen ist.

43. Vorrichtung nach wenigstens einem der Ansprüche 38 bis 40, **dadurch gekennzeichnet, daß** nach der Konditioniereinrichtung eine Formgebungseinrichtung vorgesehen ist.

44. Vorrichtung nach wenigstens einem der Ansprüche 38 bis 43, **dadurch gekennzeichnet, daß** die Energiezufuhr in der Trocknungseinrichtung und der Heizeinrichtung durch Mikrowellen, Strahlung, Konvektion und/oder Kontaktübertragung erfolgt, und daß jeder Energieträger in einem Bereich zwischen 0% und 100% eingestellt werden kann.

45. Vorrichtung nach wenigstens einem der Ansprüche 38 bis 44, **dadurch gekennzeichnet, daß** die Trockeneinrichtung ein umlaufendes Band aufweist, das vorzugsweise mit einem saugfähigen Material beschichtet ist.

46. Vorrichtung nach wenigstens einem der Ansprüche 38 bis 45, **dadurch gekennzeichnet, daß** nach der Heizeinrichtung eine Schneideinrichtung bereitgestellt ist, um das fertiggestellte Produkt zuzuschneiden.

47. Vorrichtung nach wenigstens einem der Ansprüche 38 bis 46, **dadurch gekennzeichnet, daß** die Trockenvorrichtung als Drehrohr ausgebildet ist und entweder mit direkter Flamme, mit indirekter Beheizung des Drehrohrs mit direkter Bestrahlung oder mit externer Mikrowellenbeheizung und die Heizeinrichtung als Drehrohr oder als Pendelwanne mit analoger Energiezufuhr wie der Trockner ausgebildet ist.

48. Vorrichtung nach wenigstens einem der Ansprüche 38 bis 46, **dadurch gekennzeichnet, daß** die Trocken- und Heizeinrichtung als Fallschacht ausgebildet ist, wobei das Aufschäumen des Alkalisilikat- und/oder Ammoniumsilikatmatrixmaterials im freien Fall erfolgt.

49. Verwendung des mineralischen schaumförmigen Bau- und Strukturwerkstoffes gemäß einem der Ansprüche 1 bis 9 zur Herstellung von nicht oder wenig stabilisierten Verpackungsstoffen, vorzugsweise recyclingfähigen Verpackungsstoffen.

50. Verwendung des mineralischen schaumförmigen Bau- und Strukturwerkstoffes gemäß einem der Ansprüche 1 bis 9 zur Herstellung von hochstabilisierten Werkstoffen.

51. Verwendung des mineralischen schaumförmigen Bau- und Strukturwerkstoffes Mineralischer schaumförmiger Bau- und Strukturwerkstoff nach wenigstens einem der Ansprüche 1 bis 6, welcher bis zu Temperaturen von 900 °C formbeständig ist.

## Claims

1. A foamlike mineral building and structural material based on a substantially uniformly foamed alkali-silicate and/or ammonium-silicate matrix encompassing an open porous structure,
**characterized in that**
the open-pore matrix is essentially water-free and dimensionally stable, and that it comprises a large number of amorphous and/or crystalline, irregular hollow microspheres, hollow spherical microshells, microplates and/ or microrods defining a matrix which is open to diffusion in the range of from 80 % to 97 %, preferably 90 % to 95 %.

2. A foamlike mineral building and structural material according to claim 1, wherein the alkali-silicate and/or ammonium-silicate starting material is foamed at temperatures of from 100°C to 700°C, preferably 150°C to 250°C.

3. A foamlike mineral building and structural material according to at least one of the claims 1 or 2, which additionally contains stabilization components, preferably up to 20 % by weight of calcium or zinc or magnesium or ammonium or aluminium hydroxide or oxide or natrium compounds or silica or alumina gels or sols or mixtures of these substances.

4. A foamlike mineral building and structural material according to at least one of the claims 1 to 3, wherein the ratio of SiO₂ to the alkali or ammonium component is greater than 2 in the alkali-silicate and/or ammonium-silicate matrix.

5. A foamlike mineral building and structural material according to at least one of the claims 1 to 3, wherein the ratio of SiO₂ to the alkali or ammonium component is smaller than 2.5 in the alkali-silicate and/or ammonium-silicate matrix.

6. A foamlike mineral building and structural material according to at least one of the claims 3 to 5, **characterized by** the following properties: bulk density 0.04 - 0.10 g/cm³, compressive strength 0.010 - 0.50 MPa, thermal conductivity 0.03 - 0.10 W/(mK).

7. A foamlike mineral building and structural material according to at least one of the claims 1 to 6, containing in addition inorganic and/or organic, fine-grained fillers such as bentonite, gypsum, chalk, lime, crushed rocks, glass powder, cement, alumina, graphite and the like or organic flour/meal-, such as.wood meal, and other biomaterial or plastic or rubber flour, for increasing the strength and the chemical resistance.

8. A foamlike mineral building and structural material according to at least one of the claims 1 to 7, containing in addition reinforcing fibres, such as glass, ceramic, Skobalith, mineral, carbon or biofibres, synthetic fibres and other fibres, said fibres having a length of less then 10 mm, preferably less then 3 mm.

9. A foamlike mineral building and structural material according to at least one of the claims 1 to 7, containing in addition reinforcing fibres, such as residual industrial fibres, in particular shearing residues from the production of textiles, carpets, glass-fibre products, carbon products and biofibre residues from the production of wood, cellulose or other natural fibres.

10. A method of producing a foamlike mineral building and structural material according to at least one of the claims 1 to 9, comprising the following steps:
- adjusting the water content of the alkali-silicate and/or ammonium-silicate starting material to a specific value,
- foaming the pretreated alkali-silicate and/or ammonium-silicate material.

11. A method of producing a foamlike mineral building and structural material according to claim 10, **characterized in that** the water content of the alkali-silicate and/or ammonium-silicate starting material is adjusted by means of drying.

12. A method of producing a foamlike mineral building and structural material according to at least one of the claims 10 to 11, **characterized in that** the water content of the alkali-silicate and/or ammonium-silicate starting material is adjusted to a percentage of less than 20 % by weight, preferably 10 to 15 % by weight, but not less than 5 % by weight in relation to the alkali-silicate and/or ammonium-silicate starting material.

13. A method of producing a foamlike mineral building and structural material according to at least one of the claims 11 or 12, **characterized in that** the drying of the alkali-silicate and/or ammonium-silicate starting material is carried out making use of microwaves at temperatures of up to 110°C, preferably at temperatures between 80°C and 90°C.

14. A method of producing a foamlike mineral building and structural material according to at least one of the claims 10 to 13, **characterized in that** the drying of the alkali-silicate and/or ammonium-silicate starting material is carried out in a heated kneader, extruder, calender or in a belt drier, drum drier, disc drier or in some other drying apparatus.

15. A method of producing a foamlike mineral building and structural material according to at least one of the claims 10 to 14, **characterized in that** the alkali-silicate and/or ammonium-silicate starting material with the adjusted water content is expanded in the foaming step to a volume which is 5 to 30 times, preferably 10 to 20 times as large as the original volume.

16. A method of producing a foamlike mineral building and structural material according to at least one of the claims 10 to 15, **characterized in that** the foaming step is carried out at temperatures between 100°C and 700°C, preferably between 150°C and 250°C when microwave heating is used.

17. A method of producing a foamlike mineral building and structural material according to at least one of the claims 10 to 16, **characterized in that** the foaming step is carried out making use of microwaves, the exposure time in the temperature range from 100°C onwards being less than 600 seconds, preferably less than 120 seconds, until the volume enlargement has been finished.

18. A method of producing a foamlike mineral building and structural material according to at least one of the claims 10 to 16, **characterized in that** the foaming step is carried out by applying heat from outside, preferably by radiant heating, convection heating and/or contact heating.

19. A method of producing a foamlike mineral building and structural material according to at least one of the claims 10 to 18, **characterized by** the additional step of hardening the expanded alkali-silicate and/or ammonium-silicate starting material by freezing crystallization and/or freezing vitrification at the temperatures in the range of from 20°C to 100°C.

20. A method of producing a foamlike mineral building and structural material according to at least one of the claims 10 to 19, **characterized by** the additional step of introducing the alkali-silicate and/or ammonium-silicate starting material with the adjusted water content into a cooled mould or a cooled zone of the mould, whereby hardening of the building and structural material close to the surface of said material is effected.

21. A method of producing a foamlike mineral building and structural material according to at least one of the claims 10 to 19, **characterized by** the additional step of introducing the alkali-silicate and/or ammonium-silicate starting material with the adjusted water content into an additionally heated or preheated mould or a heated zone of the mould, whereby an open-pore surface of the building and structural material is provided, preferably for cases where said material is used as sound absorber or as a f ilter material.

22. A method of producing a foamlike mineral building and structural material according to at least one of the claims 10 to 21, **characterized in that**, prior to the step of adjusting the water content, the alkali-silicate and/or ammonium-silicate starting material is mixed with additive substances for the purpose of stabilization, strengthening and/or colouring.

23. A method of producing a foamlike mineral building and structural material according to at least one of the claims 10 to 22, **characterized in that**, after the step of adjusting the water content, the alkali-silicate and/or ammonium-silicate starting material is coated with a surface-strengthening material.

24. A method of producing a foamlike mineral building and structural material according to claim 23, **characterized in that** the surface-strengthening material consists of fabrics, foils, chips, fibres and/or flour/meal.

25. A method of producing a foamlike mineral building and structural material according to at least one of the claims 10 to 24, **characterized by** the additional step of mixing the alkali-silicate and/or ammonium-silicate starting material with additive substances in the form of calcium or zinc or magnesium or ammonium or aluminium hydroxide or oxide or natrium compounds or silica or alumina gels or sols or mixtures of these substances, the percentage of these additive substances being less than 20 % by weight.

26. A method of producing a foamlike mineral building and structural material according to at least one of the claims 10 to 25, **characterized in that**, prior to the step of adjusting the water content, the alkali-silicate and/or ammonium silicate starting material has added reinforcing fibres thereto.

27. A method of producing a foamlike mineral building and structural material according to claim 26, **characterized in that** the reinforcing fibres added are glass fibres, Skobalith fibres, synthetic fibres, carbon fibres, ceramic fibres and/or biofibres.

28. A method of producing a foamlike mineral building and structural material according to claim 26 or 27, **characterized in that** the reinforcing fibres have a fibre length of less then 10 mm, preferably less then 3 mm.

29. A method of producing a foamlike mineral building and structural material according to at least one of the claims 10 to 28, **characterized in that**, prior to the step of adjusting the water content, the alkali-silicate and/or ammonium-silicate starting material has added thereto residual industrial fibres, in particular shearing residues from the production of textiles, carpets, glass fibres, carbon products and similar fibres and/or sawdust and other biofibres.

30. A method of producing a foamlike mineral building and structural material according to at least one of the claims 10 to 29, **characterized in that**, prior to or subsequent to the adjustment of the water content, the alkali-silicate and/or ammonium-silicate starting material is enveloped fully or partly with an absorbent material.

31. A method of producing a foamlike mineral building and structural material according to claim 30, **characterized in that** the enveloping material used is an absorbent material such as felts, fleeces, mineral fibres, absorbent organic substances, frits or unglazed ordinary or fine ceramics.

32. A method of producing a foamlike mineral building and structural material according to claim 30 or 31, **characterized in that** the absorbent material combines with the alkali-silicate and/or ammonium-silicate matrix during these methods steps and forms a cover layer of the finished product.

33. A method of producing a foamlike mineral building and structural material according to at least one of the claims 10 to 32, **characterized in that** the alkali-silicate and/or ammonium-silicate matrix material is given a desired shape prior to adjusting the water content.

34. A method of producing a foamlike mineral building and structural material according to at least one of the claims 10 to 32, **characterized in that**, prior to or subsequent to adjusting the water content, the shaped alkali-silicate and/or ammonium-silicate starting material is introduced in foaming moulds consisting of plastic material, ceramics or other mineral materials.

35. A method of producing a foamlike mineral building and structural material according to at least one of the claims 10 to 32, **characterized in that**, prior to adjusting the water content, the alkali-silicate and/or ammonium-silicate starting material is given the shape of a granulate.

36. A method of producing a foamlike mineral building and structural material according to at least one of the claims 10 to 35, **characterized in that** the step of adjusting the water content and the foaming step are performed separately in time and/or space.

37. A predried semifinsihed product for producing a foamlike mineral building and structural material in accordance with the method according to at least one of the claims 10 to 36, obtained after the step of adjusting the water content.

38. An apparatus for carrying out the method according to claims 10 to 36, **characterized by**
- a conditioner for adjusting the water content of the alkali-silicate and/or ammonium-silicate starting material and by
- a heating means for the foaming step.

39. An apparatus according to claim 38, **characterized in that** the conditioner is implemented as a drier.

40. An apparatus according to claim 38 or 39, **characterized in that** a transport device is provided for transporting the alkali-silicate and/or ammonium-silicate material up to, between and into the individual means.

41. An apparatus according to at least one of the claims 38 to 40, **characterized in that** the conditioner is preceded by a mixing unit for mixing the alkali-silicate and/or ammonium-silicate starting material and, if desired, additive substances.

42. An apparatus according to at least one of the claims 38 to 41, **characterized in that** the conditioner is preceded by a homogenization means and/or a dosing means and/or a shaping means.

43. An apparatus according to at least one of the claims 38 to 40, **characterized in that** the conditioner is followed by a shaping means.

44. An apparatus according to at least one of the claims 38 to 43, **characterized in that** the supply of energy in the drier and in the heating means is effected by microwaves, radiation, convection and/or contact transfer, and that each energy carrier can be adjusted in a range between 0 % and 100 %.

45. An apparatus according to at least one of the claims 38 to 44, **characterized in that** the drier comprises a circulating belt which is preferably coated with an absorbent material.

46. An apparatus according to at least one of the claims 38 to 45, **characterized in that** a cutting means for cutting the finished product to size is provided after the heating means.

47. An apparatus according to at least one of the claims 38 to 46, **characterized in that** the drier is implemented as a rotary kiln and that it operates either with a direct flame, with indirect heating of the rotary kiln, with direct irradiation or with external microwave heating, and that the heating means is implemented as a rotary kiln or as a pendulum-type trough whose supply of energy is analogous to that of the drier.

48. An apparatus according to at least one of the claims 38 to 46, **characterized in that** the drier and the heating means are implemented as a drop shaft, the alkali-silicate and/or ammonium-silicate matrix material being foamed in free descent

49. The use of the foamlike mineral building and structural material according to one of the claims 1 to 9 for producing non-stabilized or only slightly stabilized packaging material, preferably recyclable packaging material.

50. The use of the foamlike mineral building and structural material according to one of the claims 1 to 9 for producing highly stabilized materials.

51. The use of the foamlike mineral building and structural material according to at least one of the claims 1 to 6, said foamlike mineral building and structural material being dimensionally stable up to temperatures of 900°C.

## Revendications

1. Matériau de construction et de structure en mousse minérale à base d'une matrice de silicate alcalin et/ou de silicate d'ammonium expansée de façon sensiblement homogène, qui entoure une structure à porosité ouverte,
**caractérisé en ce que** la matrice à porosité ouverte est pour l'essentiel anhydre et indéformable, et **en ce qu'**elle est constituée d'une multitude de microbilles creuses, de coques de microbilles creuses, de microplaquettes et/ou de microbâtonnets irréguliers amorphes et/ou cristallins qui forment une matrice, qui est à diffusion ouverte dans la plage de 80 % à 97 %, de préférence de 90 % à 95 %.

2. Matériau de construction et de structure en mousse minérale selon la revendication 1, dans lequel le matériau de départ constitué de silicate alcalin et/ou de silicate d'ammonium est expansé à des températures allant de 100 °C à 700 °C, de préférence de 150 °C à 250 °C.

3. Matériau de construction et de structure en mousse minérale selon l'une au moins des revendications 1 ou 2, contenant en outre des composants de stabilisation, de préférence jusqu'à 20 % en poids d'hydroxyde ou d'oxyde ou de composés salins de calcium ou de zinc ou de magnésium ou d'ammonium ou d'aluminium, ou des gels ou sols de silice ou d'alumine, ou des mélanges de ces matières.

4. Matériau de construction et de structure en mousse minérale selon l'une au moins des revendications 1 à 3, dans lequel le rapport entre le SiO₂ et la proportion en alcalin ou en ammonium de la matrice de silicate alcalin et/ou de silicate d'ammonium est supérieur à 2.

5. Matériau de construction et de structure en mousse minérale selon l'une au moins des revendications 1 à 3, selon lequel le rapport entre le SiO₂ et la proportion en alcalin ou en ammonium de la matrice de silicate alcalin et/ou de silicate d'ammonium est inférieur à 2,5.

6. Matériau de construction et de structure en mousse minérale selon l'une au moins des revendications 3 à 5, **caractérisé par** les propriétés suivantes :
masse volumique apparente 0,04 à 0,10 g/cm³, résistance à la compression 0,010 à 0,50 MPa, conductibilité thermique 0,03 à 0,10 W/mK.

7. Matériau de construction et de structure en mousse minérale selon l'une au moins des revendications 1 à 6, contenant en outre des matières de charge inorganiques et/ou organiques à grains fins telles que de la bentonite, du plâtre, de la craie, de la chaux, de la poudre de friction, de la poudre en verre, du ciment, de l'alumine, du graphite et analogues, ou des poudres organiques telles que de la sciure de bois ou autre matériau biologique, ou des poudres de matière plastique ou de caoutchouc, pour l'augmentation de la résistance et de la stabilité chimique.

8. Matériau de construction et de structure en mousse minérale selon l'une au moins des revendications 1 à 7, contenant en outre des fibres de renforcement telles que des fibres de verre, de céramique, de scobalithe, des fibres minérales, des fibres de carbone, des fibres biologiques, des fibres synthétiques et autres fibres, les fibres ayant une longueur inférieure à 10 mm, de préférence inférieure à 3 mm.

9. Matériau de construction et de structure en mousse minérale selon l'une au moins des revendications 1 à 7, contenant en outre des fibres de renforcement telles que des fibres résiduelles provenant de l'industrie, notamment des restes de découpe provenant de la fabrication de textiles, de tapis, de produits en fibres de verre, de produits en carbone et des fibres biologiques résiduelles provenant de la transformation du bois, de la cellulose, ou d'autres fibres naturelles.

10. Procédé de fabrication d'un matériau de construction et de structure en mousse minérale selon l'une au moins des revendications 1 à 9, comportant les étapes suivantes :
- ajustement de la teneur en eau à une valeur déterminée du matériau de départ constitué de silicate alcalin et/ou de silicate d'ammonium,
- expansion du matériau constitué de silicate alcalin et/ou de silicate d'ammonium préalablement traité.

11. Procédé de fabrication d'un matériau de construction et de structure en mousse minérale selon la revendication 10, **caractérisé en ce que** l'ajustement de la teneur en eau du matériau de départ constitué de silicate alcalin et/ou de silicate d'ammonium est effectué par séchage.

12. Procédé de fabrication d'un matériau de construction et de structure en mousse minérale selon l'une au moins des revendications 10 ou 11, **caractérisé en ce que** la teneur en eau du matériau de départ constitué de silicate alcalin et/ou de silicate d'ammonium est ajustée à une proportion de moins de 20 % en poids, de préférence de 10 à 15 % en poids, mais non inférieure à 5 % en poids, rapportés au matériau de départ constitué de silicate alcalin et/ou de silicate d'ammonium.

13. Procédé de fabrication d'un matériau de construction et de structure en mousse minérale selon l'une au moins des revendications 11 ou 12, **caractérisé en ce que** le séchage du matériau de départ constitué de silicate alcalin et/ou de silicate d'ammonium est effectué avec l'utilisation de micro-ondes à des températures pouvant aller jusqu'à 110 °C, de préférence à des températures comprises entre 80 °C et 90 °C.

14. Procédé de fabrication d'un matériau de construction et de structure en mousse minérale selon l'une au moins des revendications 10 à 13, **caractérisé en ce que** le séchage du matériau de départ constitué de silicate alcalin et/ou de silicate d'ammonium est . effectué dans un malaxeur, une extrudeuse, une calandre chauffés ou dans un sécheur à bande, à cylindres, à disques ou dans un autre appareil de séchage.

15. Procédé de fabrication d'un matériau de construction et de structure en mousse minérale selon l'une au moins des revendications 10 à 14, **caractérisé en ce que** le matériau de départ constitué de silicate alcalin et/ou de silicate d'ammonium à teneur en eau ajustée est expansé lors de l'étape d'expansion de 5 à 30 fois, de préférence de 10 à 20 fois son volume.

16. Procédé de fabrication d'un matériau de construction et de structure en mousse minérale selon l'une au moins des revendications 10 à 15, **caractérisé en ce que** l'expansion est effectuée à des températures comprises entre 100 °C et 700 °C, de préférence entre 150 °C et 250 °C en utilisant un chauffage à micro-ondes.

17. Procédé de fabrication d'un matériau de construction et de structure en mousse minérale selon l'une au moins des revendications 10 à 16, **caractérisé en ce que** l'expansion est effectuée avec l'utilisation de micro-ondes, le temps d'exposition dans la plage de température à partir de 100 °C jusqu'à la fin de l'augmentation de volume étant inférieur à 600 secondes, de préférence inférieur à 120 secondes.

18. Procédé de fabrication d'un matériau de construction et de structure en mousse minérale selon l'une au moins des revendications 10 à 16, **caractérisé en ce que** l'expansion est effectuée par action de chaleur externe, de préférence par un chauffage à rayonnement, par convection et/ou par contact.

19. Procédé de fabrication d'un matériau de construction et de structure en mousse minérale selon l'une au moins des revendications 10 à 18, **caractérisé par** une étape supplémentaire de consolidation du matériau de départ constitué de silicate alcalin et/ou de silicate d'ammonium expansé, par cristallisation de solidification et/ou vitrification de solidification à des températures allant de 20 °C à 100 °C.

20. Procédé de fabrication d'un matériau de construction et de structure en mousse minérale selon l'une au moins des revendications 10 à 19, **caractérisé par** une étape supplémentaire de mise en place du matériau de départ constitué de silicate alcalin et/ou de silicate d'ammonium à teneur en eau ajustée, dans un moule refroidi ou une zone refroidie du moule, ce qui conduit à une consolidation proche de la surface du matériau de construction et de structure.

21. Procédé de fabrication d'un matériau de construction et de structure en mousse minérale selon l'une au moins des revendications 10 à 19, **caractérisé par** une étape supplémentaire d'introduction du matériau de départ constitué de silicate alcalin et/ou de silicate d'ammonium à teneur en eau réglée, dans un moule supplémentaire chauffé ou préchauffé ou dans une zone chauffée du moule, ce qui conduit à une surface à porosité ouverte du matériau de construction et de structure, de préférence pour des applications d'absorption acoustique ou en tant que matériau filtrant.

22. Procédé de fabrication d'un matériau de construction et de structure en mousse minérale selon l'une au moins des revendications 10 à 21, **caractérisé en ce que**, avant l'étape d'ajustement de la teneur en eau, des additifs de stabilisation, de renforcement et/ou colorants sont ajoutés au matériau de départ constitué de silicate alcalin et/ou de silicate d'ammonium.

23. Procédé de fabrication d'un matériau de construction et de structure en mousse minérale selon l'une au moins des revendications 10 à 22, **caractérisé en ce que**, après l'étape de réglage de la teneur en eau, le matériau de départ constitué de silicate alcalin et/ou de silicate d'ammonium est revêtu d'un matériau de renforcement de surface.

24. Procédé de fabrication d'un matériau de construction et de structure en mousse minérale selon la revendication 23, **caractérisé en ce que** le matériau de renforcement de surface est constitué de tissus, de feuilles, de copeaux, de fibres et/ou de poudres.

25. Procédé de fabrication d'un matériau de construction et de structure en mousse minérale selon l'une au moins des revendications 10 à 24, **caractérisé par** une étape supplémentaire de mélange du matériau de départ constitué de silicate alcalin et/ou de silicate d'ammonium avec des additifs sous forme d'hydroxyde, d'oxyde ou de composés salins de calcium ou de zinc ou de magnésium ou d'ammonium ou d'aluminium, ou des gels / sols de silice ou d'alumine, ou de mélanges de ces matières, la proportion de ces additifs étant inférieure à 20 % en poids.

26. Procédé de fabrication d'un matériau de construction et de structure en mousse minérale selon l'une au moins des revendications 10 à 25, **caractérisé en ce que**, avant l'ajustement de la teneur en eau, des fibres de renforcement sont ajoutées au matériau de départ constitué de silicate alcalin et/ou de silicate d'ammonium.

27. Procédé de fabrication d'un matériau de construction et de structure en mousse minérale selon la revendication 26, **caractérisé en ce que** des fibres de verre, des fibres de scobalithe, des fibres synthétiques, des fibres de carbone, des fibres céramiques et/ou des fibres biologiques, sont ajoutées en tant que fibres de renforcement.

28. Procédé de fabrication d'un matériau de construction et de structure en mousse minérale selon la revendication 26 ou 27, **caractérisé en ce que** les fibres de renforcement ont une longueur inférieure à 10 mm, de préférence inférieure à 3 mm.

29. Procédé de fabrication d'un matériau de construction et de structure en mousse minérale selon l'une au moins des revendications 10 à 28, **caractérisé en ce que**, avant l'ajustement de la teneur en eau, des fibres résiduelles provenant de l'industrie, notamment des restes de découpe provenant de la fabrication de textiles, de tapis, de fibres de verre, de produits en carbone et fibres analogues, et/ou des copeaux de sciage et autres fibres biologiques sont ajoutées au matériau de départ constitué de silicate alcalin et/ou de silicate d'ammonium.

30. Procédé de fabrication d'un matériau de construction et de structure en mousse minérale selon l'une au moins des revendications 10 à 29, **caractérisé en ce que**, avant ou après le réglage de la teneur en eau, le matériau de départ constitué de silicate alcalin et/ou de silicate d'ammonium est enrobé entièrement ou partiellement d'un matériau absorbant.

31. Procédé de fabrication d'un matériau de construction et de structure en mousse minérale selon la revendication 30, **caractérisé en ce qu'**un matériau absorbant tel que des feutres, des non-tissés, des fibres minérales, des matières organiques absorbantes, des frittes ou de la céramique lourde ou fine non émaillée, est utilisé en tant qu'enrobant.

32. Procédé de fabrication d'un matériau de construction et de structure en mousse minérale selon la revendication 30 ou 31, **caractérisé en ce que**, pendant les étapes du procédé, le matériau absorbant se lie à la matrice de silicate alcalin et/ou de silicate d'ammonium, et forme une couche de finition du produit fini.

33. Procédé de fabrication d'un matériau de construction et de structure en mousse minérale selon l'une au moins des revendications 10 à 32, **caractérisé en ce que**, avant l'ajustement de la teneur en eau, le matériau de la matrice de silicate alcalin et/ou de silicate d'ammonium est moulé en une forme souhaitée.

34. Procédé de fabrication d'un matériau de construction et de structure en mousse minérale selon l'une au moins des revendications 10 à 32, **caractérisé en ce que**, avant ou après l'ajustement de la teneur en eau, le matériau de la matrice de silicate alcalin et/ou de silicate d'ammonium conformé est inséré dans des moules d'expansion en matière plastique, céramique ou autres matières minérales.

35. Procédé de fabrication d'un matériau de construction et de structure en mousse minérale selon l'une au moins des revendications 10 à 32, **caractérisé en ce que**, avant le réglage de la teneur en eau, le matériau de départ constitué de silicate alcalin et/ou de silicate d'ammonium est transformé en un granulat.

36. Procédé de fabrication d'un matériau de construction et de structure en mousse minérale selon l'une au moins des revendications 10 à 35, **caractérisé en ce que** les étapes de réglage de la teneur en eau et de l'expansion sont effectuées séparément dans le temps et/ou dans l'espace.

37. Produit semi-f ini préséché destiné à la fabrication d'un matériau de construction et de structure en mousse minérale selon le procédé suivant l'une au moins des revendications 10 à 36, obtenu après l'étape de réglage de la teneur en eau.

38. Dispositif destiné à la mis e en oeuvre du procédé selon l'une quelconque des revendications 10 à 36, **caractérisé par**
- un dispositif de conditionnement pour l'ajustement de la teneur en eau du matériau de départ de la matrice de silicate alcalin et/ou de silicate d' ammonium, et par
- un dispositif de chauffage pour l'expansion.

39. Dispositif selon la revendication 38, **caractérisé en ce que** le dispositif de conditionnement est agencé sous la forme d'un dispositif de séchage.

40. Dispositif selon la revendication 3 8 ou 39, **caractérisé en ce qu'**il est prévu un dispositif d'acheminement pour le transport de la matrice de silicate alcalin et/ou de silicate d'ammonium vers, entre et dans les différents dispositifs.

41. Dispositif selon l'une au moins des revendications 38 à 40, **caractérisé en ce qu'**un dispositif de mélange est prévu en amont du dispositif de conditionnement afin de mélanger le matériau de départ constitué de silicate alcalin et/ou de silicate d'ammonium, et le cas échéant des additifs.

42. Dispositif selon l'une au moin s des revendications 38 à 41, **caractérisé en ce qu'**en amont du dispositif de conditionnement, il est prévu un dispositif d'homogénéisation et/ou un dispositif de dosage et/ou un dispositif de modelage.

43. Dispositif selon l'une au moins des revendications 38 à 40, **caractérisé en ce qu'**un dispositif de modelage est prévu en aval du dispositif de conditionnement.

44. Dispositif selon l'une au moins des revendications 38 à 43, **caractérisé en ce que** l'apport d'énergie dans le dispositif de séchage et dans le dispositif de chauffage est effectuée par micro-ondes, rayonnement, convection et/ou par transmission de contact, et **en ce que** chaque support d'énergie est réglé dans une plage comprise entre 0 % et 100 %.

45. Dispositif selon l'une au moins des revendications 38 à 44, **caractérisé en ce que** le dispositif de séchage comporte une bande rotative, qui est de préférence revêtue d'un matériau absorbant.

46. Dispositif selon l'une au moins des revendications 38 à 45, **caractérisé en ce qu'**un dispositif de découpe est mis à disposition en aval du dispositif de chauffage afin de découper le produit fini.

47. Dispositif selon l'une au moins des revendications 38 à 46, **caractérisé en ce que** le dispositif de séchage est agencé sous la forme d'un tube rotatif et avec une flamme directe, un chauffage indirect du tube rotatif, un rayonnement direct, ou avec un chauffage externe à micro-ondes, et **en ce que** le dispositif de chauffage est agencé sous la forme d'un tube rotatif ou d'une cuve oscillante avec une amenée d'énergie analogue à celle du sécheur.

48. Dispositif selon l'une au moins des revendications 38 à 46, **caractérisé en ce que** le dispositif de séchage et de chauffage est agencé sous la forme d'un puits sous pression, l'expansion du matériau de la matrice de silicate alcalin et/ou de silicate d'ammonium étant effectuée en chute libre.

49. Utilisation du matériau de construction et de structure en mousse minérale selon l'une quelconque des revendications 1 à 9 pour la fabrication de matériaux d'emballage non stabilisés ou peu stabilisés, de préférence de matériaux d'emballage recyclables.

50. Utilisation du matériau de construction et de structure en mousse minérale selon l'une quelconque des revendications 1 à 9 pour la fabrication de matériaux hautement stabilisés.

51. Utilisation du matériau de construction et de structure en mousse minérale selon l'une au moins des revendications 1 à 6, lequel résiste à la déformation jusqu'à des températures de 900 °C.
